# EUROPÄISCHE PATENTSCHRIFT

(11) **EP 1 086 320 B1**
(45) Veröffentlichungstag und Bekanntmachung des Hinweises auf die Patenterteilung: **25.05.2005**
(21) Anmeldenummer: 00920628.5
(22) Anmeldetag: 30.03.2000
(51) Int. Cl.: F16F 1/12

(54) **FEDEREINRICHTUNG**
SPRING ASSEMBLY
ENSEMBLE RESSORT

(30) Priorität: 09.04.1999 DE 19916017
(43) Veröffentlichungstag der Anmeldung: 28.03.2001
(73) Patentinhaber: Denk Engineering GmbH, 79102 Freiburg (DE)
(72) Erfinder: DENK, Peter, D-79102 Freiburg (DE); EBERSBACH, Wolfgang, D-79194 Gundelfingen (DE)
(74) Vertreter: Wallinger, Michael, Dr.-Ing.
(86) Internationale Anmeldenummer: PCT/EP2000/002810
(87) Internationale Veröffentlichungsnummer: WO 2000/061963

(56) Entgegenhaltungen:
- US-A- 5 803 443
- PATENT ABSTRACTS OF JAPAN vol. 005, no. 014 (M-052), 28. Januar 1981 (1981-01-28) & JP 55 145831 A (NICHIDEN MACH LTD), 13. November 1980 (1980-11-13)

## Beschreibung

Die Erfindung betrifft eine Federeinrichtung, insbesondere eine Federeinrichtung mit Schraubenfeder, welche eine Einstellmöglichkeit aufweist, sowie eine Verwendung einer Federeinrichtung mit Einstellmöglichkeit zur Federung eines Fahrzeugs, insbesondere zur Federung eines Kraftfahrzeugs oder eines Fahrrades.

Federeinrichtungen werden beispielsweise in Fahrzeugen wie Fahrrädern oder Kraftfahrzeugen, oder in Maschinen eingesetzt, um insbesondere das schwingungstechnische Verhalten dieser Einrichtungen zu verbessern bzw. an die Dynamik anzupassen. Dabei werden unterschiedliche Bauteile zur wenigstens teilweisen mechanischen Entkopplung über Federelemente verbunden. Zusätzlich können Dämpferelemente vorgesehen werden, die das dynamische Verhalten des Gesamtsystems beeinflussen und insbesondere ein Aufschwingen des Gesamtsystems verhindern.

Federeinrichtungen werden beispielsweise eingesetzt, um die Räder von Fahrzeugen gegenüber der Karosserie mechanisch zu entkoppeln. Beispielsweise werden zur Radaufhängung von Kraftfahrzeugen Federeinrichtungen verwendet. Auch bei der Radaufhängung von Zweirädern, insbesondere von Fahrrädern, werden Federelemente - häufig in Kombination mit Dämpfelementen - verwendet. So werden Federelemente beispielsweise in sogenannten Federgabeln eingesetzt.

Beispielsweise sind innerhalb der Gabelholme jeweils Federeinrichtungen angeordnet, welche mit einem Elastomerdämpfer zusammenwirken. Über diese Federdämpferanordnung werden die Gabelholme vom Gabelschaftrohr mechanisch entkoppelt.

Aus der US-A-5 803 443 ist eine Federeinrichtung für ein Motorfahrzeug bekannt. Diese Federeinrichtung weist eine Schraubenfeder auf, in welche äußere Kräfte an Kraftübertragungsabschnitten an der Oberfläche der Schraubenfeder einleitbar sind. Weiter weist sie eine Kraftübertragungseinrichtung auf, welche die Schraubenfeder zur Übertragung der äußeren Kräfte in einem Kontaktbereich des Kraftübertragungsabschnittes kontaktiert.

Ohne die Erfindung zu beschränken, wird die Erfindung nun nachfolgend insbesondere am Beispiel einer Fahrrad-Radaufhängung eingehender beschrieben, wobei darauf hingewiesen sei, daß in diversen anderen Anwendungsmöglichkeiten, wie beispielsweise in Maschinen, wie Werkzeugmaschinen, bei Kraftfahrzeug-Radaufhängungen oder dergleichen eine erfindungsgemäße Federeinrichtung bevorzugt ist.

Erfindungsgemäß werden Federeinrichtungen gemäß Anspruch 1 und Anspruch 5 vorgeschlagen.

Eine erfindungsgemäße Verwendung ist Gegenstand des Anspruchs 4.

Bevorzugte Weiterbildungen der Erfindung sind Gegenstand der Unteransprüche.

Die Feder weist Kraftübertragungsabschnitte auf, die von der Federoberfläche umfaßt sein können und in welche äußere Kräfte an wenigstens zwei Stellen von jeweils wenigstens einem Umbauteil einleitbar sind, wobei diese Umbauteile vorzugsweise über die Feder mechanisch entkoppelt sind.

Unter Kraftübertragungsabschnitten sind dabei insbesondere Bereiche der Federoberfläche zu verstehen. Die Kraftübertragungsabschnitte können dabei in Abhängigkeit von vorbestimmten Gegebenheiten an verschiedenen Stellen der Federoberfläche bzw. in verschiedenen Oberflächenbereichen der Feder angeordnet sein. Die äußeren Kräfte werden dabei insbesondere jeweils von wenigstens einem Umbauteil eingeleitet.

Der Begriff des Umbauteils ist dabei weit gefaßt zu verstehen. Ein Umbauteil ist dabei insbesondere ein mit der Federeinrichtung gekoppeltes Bauteil, welches die Federeinrichtung derart kontaktiert, daß von dem Umbauteil auf die Federeinrichtung aufgebrachte Kräfte wenigstens teilweise isoliert werden. Beispielsweise ist unter einem Umbauteil eine auf eine Feder aufgesetzte Kappe zu verstehen oder eine sich an die Feder anschließende Dämpfereinrichtung oder ein Gabelholm eines Fahrrades oder ein Gabelschaftrohr oder jeweils damit fest verbundene Teile.

Die von außen eingeleiteten Kräfte können unterschiedlichster Art sein. Beispielsweise können in einer entsprechenden Verwendung einer erfindungsgemäßen Federeinrichtung, welche beispielsweise in einem Gabelholm oder in einem Gabelschaftrohr eines Fahrrades montiert ist oder welche in entsprechender Weise zur Hinterradfederung eines Fahrrades am Rad montiert ist, einerseits die fahrerseitig vom Rad und/oder Fahrer in die Feder induzierten Kräfte aufnehmen und andererseits die über die Feder hiervon gekoppelten Kräfte, die über das Rad des Fahrrades vom Untergrund in die Feder eingeleitet werden können. Dabei können insbesondere dynamische Belastungen, die beispielsweise durch sich ändernde Untergrundverhältnisse wie Steine , Bordsteine oder Schlaglöcher oder dergleichen bedingt sind, von der Federeinrichtung wenigstens teilweise isoliert werden, so daß sie nicht an den Fahrer weitergeleitet werden.

Die Einstelleinrichtung ist beispielsweise derart ausgebildet, daß die Feder in einem kappenartigen Element, wie beispielsweise einem Drehknopf, mit ihrem einen Ende fest gelagert ist, wobei die Kappe mit der Feder um die Federachse drehbar gelagert ist. An einer zweiten Stelle liegt die Feder mit ihren Windungen in einem Gewinde, welches beispielsweise auf dem Mantel eines Dämpferdeckels oder dergleichen angeordnet ist. Eine Verdrehung des Drehknopfes bewirkt, daß sich die Windungen der Feder schraubenförmig im Gewinde, beispielsweise im Gewinde am Dämpferdeckel, verdrehen, so daß das Gewinde gegenüber der Feder wandert. Hierdurch verändert sich der Abstand zwischen dem mit dem Drehknopf versehenen Federende und dem Abschnitt der Federwindungen, der momentan in dem Gewinde liegt, so daß die Feder, ohne zusätzlich ge- oder entspannt zu werden, ihre wirksame Federlänge, also die Länge zwischen zwei Kraftangriffspunkten, verändert. Dabei wird ein Umbauteil, welches mit dem Gewinde fest verbunden ist, von einem Umbauteil, welches mit der Kappe - zumindest in Federachsrichtung - fest gekoppelt ist, mechanisch entkoppelt.

Gemäß einer weiteren beispielhaften Ausführungsform der Erfindung weist jeweils ein drehbar gelagertes Standrohr eines Fahrrades in seinem nach unten gerichteten Bereich ein Innengewinde auf bzw. ist mit einem Bauteil, wie beispielsweise einer Hülse, fest verbunden, welches ein Innengewinde aufweist. Von diesem Innengewinde ist eine Schraubenfeder aufnehmbar, so daß die Schraubenfeder mit dem Innengewinde eine Art Schrauben-Mutter-Verbindung bildet. An einem Ende stützt sich die Schraubenfeder gegenüber einem gegenüber dem Standrohr axialverschieblich gelagerten Gabelholm oder einem damit fest verbundenen Bauteil ab. Bevorzugt verhindert eine Verdrehsicherung, die zwischen Gabelholm und Feder angeordnet ist bzw. von diesen gebildet wird, daß sich die Feder in ihrem Endbereich gegenüber dem Gabelholm verdreht. Ein Drehen des Standrohrs bewirkt, daß sich die Feder, die eine Art Außengewinde darstellt, in dem Innengewinde des Standrohrs bewegt, so daß die wirksame Federlänge, also die Länge zwischen dem Windungsbereich der Feder, der in dem Innengewinde des Standrohrs aufgenommen wird, und der Abstützung der Feder am Gabelholm verändert. Auf diese Art und Weise läßt sich die wirksame Federlänge verändern, ohne daß die Vorspannung der Feder dabei im wirksamen Federlängenbereich verändert wird.

Gemäß einer weiteren bevorzugten Ausführungsform der Erfindung, die sich ebenfalls beispielsweise an einem Fahrrad einsetzen läßt, ist ein Einstellknopf mit einer Art Schaft verbunden, welcher ein Außengewinde aufweist.

Bevorzugt ist auch, daß statt eines Schaftes mit Außengewinde eine Art Rohr mit Innengewinde vorgesehen ist. Auch die Kombination beider Möglichkeiten ist bevorzugt.

Dieses Gewinde bzw. diese Gewinde greifen in die Windungen der Feder ein, so daß die Feder eine Art Gegengewinde bildet. Die Feder stützt sich an dem dem Drehknopf abgewandten Ende gegen ein Umbauteil, wie beispielsweise einem Gabelholm, ab, und ist dort vorzugsweise gegen Verdrehung gegenüber dem Umbauteil gesichert. Der Drehknopf mit Schaft bzw. Hohlwelle ist beispielsweise in den Gabelholm eingesteckt. Durch Verdrehung des Drehknopfs drückt sich der Drehknopf samt Schaft relativ vom Gabelholm weg bzw. nähert sich relativ zum Gabelholm an. Dabei schraubt sich das mit dem Einstellknopf verbundene Gewinde weiter in die Feder hinein bzw. dreht sich aus der Feder heraus. Das freie Ende der Feder, das sich gegen das Umbauteil, wie beispielsweise den Gabelholm, abstützt, verlängert sich, so daß sich die wirksame Federlänge verändert. Da der Gabelholm gegenüber dem Einstellknopf axialbeweglich angeordnet ist, wird eine durch den Einstellvorgang bedingte Veränderung der Federspannung im Bereich der jeweils wirksamen Federlänge vermieden.

Gemäß einer besonders bevorzugten Ausführungsform der Erfindung sind mit den Federwindungen über wenigstens einen Teil der Federachse Elemente fest gekoppelt, welche mit einer Aufnahmevorrichtung eines Umbauteils in Verbindung bringbar sind. Durch Relativverschiebung des Umbauteils gegenüber der Feder werden andere Elemente bzw. Elemente, die sich in axialer Richtung der Feder an anderer Stelle befinden, vor die Aufnahmevorrichtung gebracht und können dort eingehakt oder dergleichen werden.

Die Erfindung ist insbesondere insofern vorteilhaft, als sie eine - insbesondere stufenlose - Einstellung der Federkennlinie ermöglicht, ohne dabei die Einstellung die Vorspannung der Feder zu verändern.

Gemäß einer besonders bevorzugten Ausführungsform der Erfindung ist von der Einstelleinrichtung, welche beispielsweise als Drehknopf mit mit Innengewinde versehenem Rohrschaft oder als Drehknopf mit mit Außengewinde versehenem Schaft ausgebildet ist, die Beabstandung der Kraftübertragungsabschnitte an der Feder einstellbar, wobei die Federspannung konstant gehalten wird.

Gemäß einer besonders bevorzugten Ausführungsform der Erfindung ist die Feder als Schraubenfeder ausgebildet.

Gemäß einer weiteren bevorzugten Ausführungsform der Erfindung erstreckt sich die Kraftübertragungseinrichtung und/oder die Einstelleinrichtung wenigstens teilweise in das Innere der Windungen bzw. des Bereichs, der von den Windungen aufgespannt wird. Da die Windungen schraubenförmig ausgebildet sind, wird durch die Windungen eine Art schlauchförmiger Bereich definiert.

Es sei angemerkt, daß der Begriff des schlauchförmigen Bereichs weit gefaßt zu verstehen ist. Von der Erfindung ist beispielsweise auch umfaßt, daß die Windungen eine Art kegelstumpfförmigen Bereich definieren.

Bevorzugt ist, daß sich die Kraftübertragungseinrichtung und/oder die Einstelleinrichtung wenigstens teilweise in das Innere dieses schlauchförmigen Bereichs erstreckt, wobei sich von der Kraftübertragungseinrichtung Bereiche zur Feder erstrecken, welche in die Feder eingreifen. Bevorzugt ist auch, daß sich von der Feder zur Kraftübertragungseinrichtung Bereiche erstrekken, die in die Kraftübertragungseinrichtung eingreifen. Bevorzugt ist die Lage, an der die Kraftübertragungseinrichtung mit den Windungen der Feder gekoppelt ist, in Richtung der Achse der Feder einstellbar.

Bevorzugt ist auch, daß die Kraftübertragungseinrichtung bzw. die Einstelleinrichtung die Windungen bzw. den schlauchförmigen Bereich von außen umgibt, wobei sich von der Kraftübertragungseinrichtung Bereiche zu den Windungen nach innen erstrecken, die mit den Windungen gekoppelt sind. Auch hier ist die Umkehrung derart bevorzugt, daß sich von den Windungen Bereiche zur Kraftübertragungseinrichtung erstrecken, die dort mit der Kraftübertragungseinrichtung gekoppelt sind. Auch hier ist bevorzugt, daß die Lage dieser Koppelbereiche in Achsrichtung der Feder einstellbar ist.

Gemäß einer besonders bevorzugten Ausführungsform der Erfindung sind die Koppelbereiche derart ausgebildet, daß im Koppelbereich eine feste, nicht bewegliche Verbindung zwischen der Kraftübertragungseinrichtung und der Feder hergestellt wird bzw. herstellbar ist.

Bevorzugt ist auch, daß im Koppelbereich eine ein Spiel aufweisende Verbindung bzw. eine Verbindung, die wenigstens einen Freiheitsgrad aufweist, vorliegt, wobei eine Relativbewegung zwischen der Kraftübertragungseinrichtung und der Feder durch einen zusätzlichen Feststellmechanismus verhindert wird. Dieser ist beispielsweise derart ausgebildet, daß die Feder um eine Kraftübertragungseinrichtung, die beispielsweise schraubenförmig ausgebildet ist, verschraubt ist, wobei grundsätzlich ein Freiheitsgrad in Richtung der Gewindegänge existiert. Eine Relativbewegung wird beispielsweise dadurch verhindert, daß das schraubenförmige Bauteil, also die Kraftübertragungseinrichtung, an anderer Stelle - beispielsweise durch einen Rastiermechanismus - festgestellt wird. Damit kann die Schraube keine Relativverdrehung gegenüber der Feder ausüben. Eine axiale Relativbewegung zwischen der Schraube und der Feder wird durch das Eingreifen der Feder in die Gewindegänge der Schraube verhindert.

Bevorzugt ist auch, daß die schraubenartige Verbindung selbsthemmend ausgebildet ist.

Gemäß einer bevorzugten Ausführungsform der Erfindung greift der sich radial außerhalb und/oder radial innerhalb der Federwindungen erstreckende Bereich der Kraftübertragungseinrichtung in wenigstens einen Windungszwischenraum ein. Wenn von diesem eingreifenden Bereich und/oder auf einen zweiten, beispielsweise am anderen Federende angeordneten Bereich eine Kraft auf die Feder aufgebracht wird, stützt sich die Feder mit ihren Windungen gegen diesen in die Windungen eingreifenden Bereich ab, so daß eine Entkopplung der Umbauteile bewirkt wird.

Bevorzugt ist auch, daß der vorgenannte Bereich in verschiedene Windungszwischenräume eingreift. Besonders bevorzugt ist, daß er in in axialer Richtung nebeneinander liegende Windungszwischenräume eingreift, wobei dieser eingreifende Bereich einen Verbindungsbereich in Form einer Vertiefung aufweist, der sich um die umgriffene Windung legt. Dies ist beispielsweise dadurch realisiert, daß ein Gewinde in den Federwindungen verschraubt ist.

Ein derartiges mit der Kraftübertragungseinrichtung verbundenes Gewinde ist bevorzugt derart dimensioniert und gegenüber der Feder angeordnet, daß sich je nach Einstellposition die Länge des in die Feder eingreifenden Gewindes verändert.

Gemäß einer besonders bevorzugten Ausführungsform der Erfindung ist die Länge des in die Feder eingreifenden Gewindes stets konstant, wobei sie sich bei einer Verstellung lediglich gegenüber der Feder in axialer Richtung verschiebt.

Gemäß einer besonders bevorzugten Ausführungsform der Erfindung bewegt sich wenigstens ein Teil der Einstelleinrichtung und/oder der Kraftübertragungseinrichtung während der Einstellung wenigstens zeitweise entlang einer dreidimensionalen Bahn. Dies ist beispielsweise dadurch realisiert, daß die Kraftübertragungseinrichtung ein Gewinde aufweist, das in die Feder eingreift und sich bei der Verstellung bzw. Einstellung gegenüber der Feder verschiebt. Die außen liegenden Bereiche des Gewindes laufen dabei auf einer spiralförmigen, also dreidimensionalen, Bahn.

Bevorzugt ist auch, daß sich wenigstens ein Teil der Einstelleinrichtung und/oder der Kraftübertragungseinrichtung bei der Einstellung wenigstens zeitweise entlang einer zweidimensionalen, beispielsweise linearen, Bahn bewegt. Dies ist beispielsweise dadurch realisiert, daß ein in axialer Richtung der Feder verschiebbares Bauteil, wie beispielsweise eine Art Stange, die Zungen oder dergleichen aufweist, die sich in radialer Richtung von der Stange in Richtung der Gewinde bzw. Gewindezwischenräume verschieben lassen, vorgesehen ist. Im Betrieb greifen diese Zungen oder dergleichen in die Zwischenräume bzw. um die Gewindegänge. Zur Verstellung werden sie über einen Mechanismus aus ihrer Eingriffsposition in Richtung der Stange bewegt. Anschließend wird die Stange in axialer Richtung verschoben, bis die gewünschte Position erreicht ist. Dann werden die Zungen oder dergleichen wieder zurück in ihre Eingriffsposition bewegt. Das Herstellen und Lösen der Eingriffsposition kann beispielsweise derart realisiert sein, daß die Zungen oder dergleichen federbelastet sind und unter der Federwirkung in eine Eingriffsposition gedrückt werden. Über einen Seilmechanismus, Stangenmechanismus oder dergleichen können sie - beispielsweise durch Ziehen am Seil - aus der Eingriffsposition gegen die Federkraft bewegt werden. Nach Entlastung des Seils bzw. der Stange schnappen sie wieder in ihre Eingriffsposition zurück.

Gemäß einer besonders bevorzugten Ausführungsform der Erfindung weist die Federeinrichtung eine Arretiereinrichtung zum Fixieren einer vorbestimmten Relativposition zwischen der Kraftübertragungseinrichtung und der Feder auf. Dies ist beispielsweise - wie bereits oben erwähnt - dadurch realisiert, daß die Kraftübertragungseinrichtung ein Gewinde zum Eingriff in die Schraube aufweist, wobei die Arretierung dadurch herstellbar ist, daß - beispielsweise über einen federbelasteten Einrastmechanismus - eine Verdrehung der Kraftübertragungseinrichtung blokkierbar ist.

Gemäß einer besonders bevorzugten Ausführungsform der Erfindung weist die Federeinrichtung eine Ausgleichseinrichtung auf bzw. ist die Federeinrichtung oder die Kraftübertragungseinrichtung oder die Einstelleinrichtung mit einer Ausgleichseinrichtung gekoppelt. Beispielsweise ist die Kraftübertragungseinrichtung als bereits oben beschriebenes schraubenförmiges Element ausgebildet. Hierdurch bewegt sich die Kraftübertragungs- bzw. Einstelleinrichtung bei einer Einstellung relativ zur Feder in axialer Richtung, so daß sich die Beabstandung zwischen dem der Feder abgewandten Ende der Kraftübertragungseinrichtung und dem der Kraftübertragungseinrichtung abgewandten Federende verändert. Über diese Stellen wird beispielsweise eine Kraft von weiteren Umgebungsbauteilen aufgenommen. Daher kann es wünschenswert sein, daß die Beabstandung dieser Punkte auch bei einer Einstellung der Feder konstant bleibt. Hierzu wird beispielsweise die Kraftübertragungseinrichtung mit einem zweiten Gewinde versehen, welche in ein Gewinde einer Hülse eingreift. Diese Hülse ist fixiert. Sofern sich nun die Beabstandung der beiden oben beschriebenen Enden der Feder bzw. Kraftübertragungseinrichtung verändert, verschiebt sich gleichzeitig die Kraftübertragungseinrichtung gegenüber der Hülse. Verkürzt sich beispielsweise die Beabstandung der oben genannten Punkte, so verlängert sich gleichzeitig die Beabstandung zwischen dem federabgewandten Hülsenende und dem hülsenabgewandten Ende der Kraftübertragungseinrichtung. Diese beiden Maße sind vorzugsweise identisch, so daß die Beabstandung zwischen federabgewandtem Ende der Hülse und hülsenabgewandtem Ende der Feder konstant bleibt.

Gemäß einer besonders bevorzugten Ausführungsform der Erfindung wird eine derartige Ausgleichseinrichtung nicht vorgesehen.

Dies ist beispielsweise bevorzugt, wenn neben einer Veränderung der Federkennlinie auch eine Veränderung der Beabstandung der Krafübertragungsbereiche gewünscht wird. So kann es beispielsweise bei einem Fahrrad gewünscht sein, daß bei einer Bergauffahrt ein Federweg von 60 mm bei steilem Lenkwinkel und straffer Abstimmung der Feder gewünscht wird, während bei einer Bergabfahrt ein Federweg von 120 mm bei flachem Lenkwinkel und weicher Abstimmung gewünscht ist.

Ein anderes Beispiel für eine Federeinrichtung, bei der neben einer veränderten Federkennlinie auch eine Veränderung der vorgenannten Abstände gewünscht wird, stellt eine stufenlose Sitzhöhenverstellung für ein Motorrad dar. Hierbei kann es gewünscht sein, daß bei einer Geländefahrt oder einer Fahrt auf sonstigem unebenem Untergrund eine hohe Sitzhöhe bei weicher Federung gewünscht ist, während bei einer Fahrt auf glattem Untergrund oder bei sportlicher Fahrweise eine niedrige Sitzhöhe bei straffer Abstimmung der Feder gewünscht ist.

Ein weiteres Beispiel für einen Fall, in dem neben einer veränderten Federkennlinie auch eine veränderte Beabstandung gewünscht ist, stellt eine stufenlose Niveauregulierung eines Autos dar. Hier kann es beispielsweise gewünscht sein, daß bei einer Stadtfahrt eine große Bodenfreiheit und eine komfortable Abstimmung gewünscht ist. Auf der Autobahn hingegen kann eine niedrige Bodenfreiheit bei straffer Abstimmung der Feder gewünscht sein.

Auch zur Fahrwerksoptimierung und Einstellung der Schwerpunktlage im Rennsport ist die Kombination von Federabstimmung und Beabstandung vorteilhaft.

Diese unterschiedlichen Kombinationen aus Höhenverstellung und Kennlinienveränderung lassen sich durch Einsatz einer erfindungsgemäßen Federeinrichtung realisieren.

Gemäß einer besonders bevorzugten Ausführungsform der Erfindung ist die Federeinrichtung mit einer Dämpfungseinrichtung gekoppelt bzw. weist die Federeinrichtung eine Dämpfereinrichtung auf bzw. ist die Federeinrichtung in Kombination mit einer Dämpfereinrichtung ausgebildet. Die Dämpfereinrichtung kann beispielsweise Bestandteil der Kraftübertragungseinrichtung und/oder der Einstelleinrichtung sein. Bevorzugt ist, daß die Dämpfereinrichtung parallel zu Federeinrichtung geschaltet ist. Besonders bevorzugt ist, daß die Federeinrichtung in Reihe zur Dämpfereinrichtung geschaltet ist.

Gemäß einer besonders bevorzugten Ausführungsform der Erfindung sind unterschiedliche Kraftübertragungsbereiche an der Feder in bereits oben beschriebener Weise einstellbar. Bevorzugt ist, daß beispielsweise zwei Kraftübertragungsbereiche an einer Feder vorgesehen sind, wobei die Feder entlang ihrer Federachse eine unterschiedliche Federkonstante aufweist. Beispielsweise sind zwei Federn unterschiedlicher Steifigkeit an einem jeweiligen Ende miteinander verbunden, wobei in jede dieser Federn jeweils eine Kraftübertragungseinrichtung mit Einstelleinrichtung eingreift. Somit lassen sich die beiden Kraftüberträgungsbereiche unabhängig voneinander verstellen. Hierbei kann zusätzlich ausgenutzt werden, daß die Federn eine unterschiedliche steifigkeit aufweisen. So läßt sich beispielsweise erreichen, daß bei konstant bleibendem Abstand der Kraftübertragungsbereich und die Steifigkeit der Feder verändert wird.

Eine bevorzugte Verwendung ist Gegenstand des Anspruches 4.

Bevorzugt wird eine erfindungsgemäße Federeinrichtung zur Federung eines Fahrzeugs, wie beispielsweise eines Kraftfahrzeugs oder eines Fahrrades oder eines Motorrades oder dergleichen verwendet. Bevorzugt ist auch der Einsatz einer erfindungsgemäßen Federeinrichtung in (industriellen) Maschinen, wie beispielsweise Werkzeugmaschinen.

Es sei darauf hingewiesen, daß der Begriff des Steuerns sowie davon abgeleitete Begriffe im Sinne der Erfindung weit gefaßt zu verstehen ist. Er umfaßt insbesondere ein Regeln und/oder Steuern.

Für den Fachmann ist ersichtlich, daß über die hier dargestellten Ausführungsbeispiele der Erfindung hinaus eine Vielzahl weiterer Modifikationen und Ausführungen denkbar sind, die von der Erfindung erfaßt sind. Die Erfindung beschränkt sich insbesondere nicht nur auf die hier dargestellten Ausführungsformen.

Im folgenden wird nun die Erfindung anhand beispielhafter, nicht beschränkender Ausführungsformen näher erläutert.

Dabei zeigt:
- Fig. 1: eine erste, beispielhafte Ausführungsform der Erfindung in Teilansicht;
- Fig. 2: eine zweite, beispielhafte Ausführungsform der Erfindung in Teilansicht;
- Fig. 3: eine dritte, beispielhafte Ausführungsform der Erfindung in Teilansicht;
- Fig. 4: eine vierte, beispielhafte Weiterbildung der Erfindung in Teilansicht;
- Fig. 5: eine fünfte, beispielhafte Weiterbildung der Erfindung in Teilansicht;
- Fig. 6: eine sechste, beispielhafte Weiterbildung der Erfindung in Teilansicht;
- Fig. 7: eine siebte, beispielhafte Weiterbildung der Erfindung in Teilansicht;
- Fig. 8: eine achte, beispielhafte Weiterbildung der Erfindung in Teilansicht;
- Fig. 9: eine neunte, beispielhafte Weiterbildung der Erfindung in Teilansicht;
- Fig. 10: eine zehnte, beispielhafte Weiterbildung der Erfindung in Teilansicht;
- Fig. 11: eine elfte, beispielhafte Ausführungsform der Erfindung in Teilansicht;
- Fig. 12: eine zwölfte, beispielhafte Ausführungsform der Erfindung in Teilansicht;
- Fig. 13: eine 13., Ausführungsform in Teilansicht;
- Fig. 14: eine 14., beispielhafte Ausführungsform der Erfindung in Teilansicht;
- Fig. 15: eine 15., Ausführungsform in Teilansicht;
- Fig. 16: eine 16., Ausführungsform in Teilansicht;
- Fig. 17: eine 17., Ausführungsform in Teilansicht;
- Fig. 18: eine 18., Ausführungsform in Teilansicht;
- Fig. 19: eine 19., Ausführungsform in Teilansicht;
- Fig. 20: eine 20., beispielhafte Weiterbildung der Erfindung in Teilansicht;
- Fig. 21: eine 21., beispielhafte Weiterbildung der Erfindung in Teilansicht;
- Fig. 22: eine 22., beispielhafte Weiterbildung der Erfindung in Teilansicht;
- Fig. 23: eine 23., beispielhafte Weiterbildung der Erfindung in Teilansicht;
- Fig. 24: eine 24., beispielhafte Weiterbildung der Erfindung in Teilansicht;

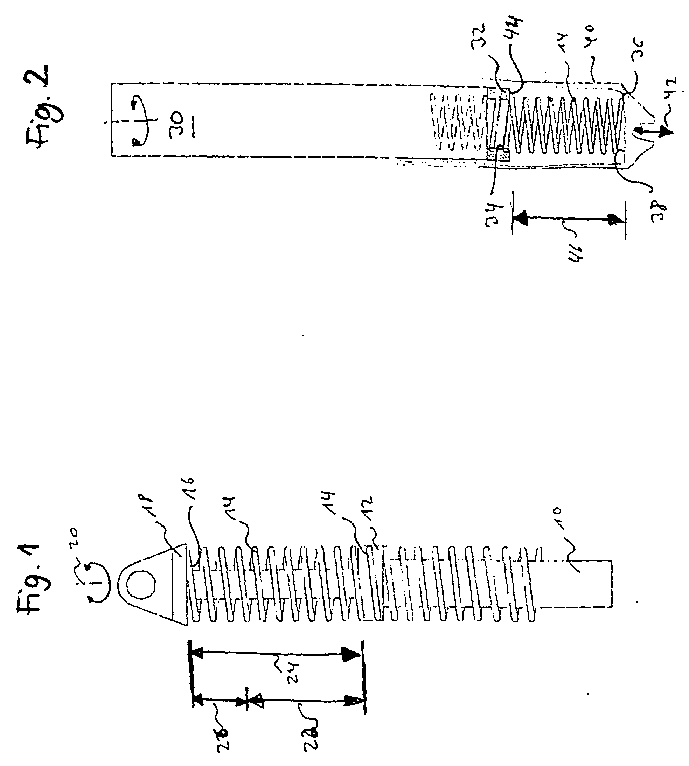

Fig. 1 zeigt eine erste, beispielhafte Ausführungsform der Erfindung in schematischer Darstellung.

Der fest angeordnete Dämpfer 10, der beispielsweise als Patrone in einer Fahrradgabel oder als eigenständiger Dämpfer ausgebildet ist, weist einen Dämpferdeckel 12 auf, der auf seinem Umfang ein Gewinde trägt, in das die Feder 14 eingreift. Dabei ist der Dämpfer 10 bzw. der Dämpferdeckel 12 gegenüber der Feder 14 beweglich angeordnet. Der Dämpfer 10 ist vorzugsweise an nicht dargestellter Stelle gegenüber einem Umbauteil fixiert. Die Feder 14 ist an ihrem einen Ende 16 in einer Drehkappe 18 fixiert. Die Drehkappe 18 ist um die Achse 20 drehbar gelagert. Bei einer Verdrehung der Kappe 18 wird die Feder 14 gedreht, so daß sie sich den Gewindegängen des Gewindes 14 axial gegenüber dem Gewinde verschiebt. Wenn der Dämpferdeckel 12 mit Gewinde beispielsweise in Folge einer Drehung der Drehkappe 18 von der Feder 14 um den Abstand 22 nach oben verschoben wird, verkürzt sich die wirksame Federlänge, die der Beabstandung zwischen der Drehkappe 18 und dem Dämpferkopf 12 entspricht, von dem Maß 24 auf das Maß 26.

Fig. 2 zeigt eine zweite, beispielhafte Ausführungsform der Erfindung. Das Standrohr 30 eines Fahrrades weist an seinem unteren Bereich eine Hülse 32 auf, die ein Innengewinde 34 trägt. In dieses Innengewinde 34 ist eine Feder 14 eingeschraubt. An ihrem nach unten gerichteten Ende 36 stützt sich die Feder 14 gegen den Boden 38 des Gabelholms 40 ab. Der Gabelholm 40 ist gegenüber dem Standrohr 30 axial beweglich angeordnet. Eine Verdrehung des Standrohrs 30 bewirkt, daß das Standrohr 30 gegenüber der Feder 14 mit seinem Gewinde 34 in Richtung des Pfeils 42 wandert, so daß sich die Beabstandung zwischen dem Boden 38 des Gabelholms 40 und dem unteren Ende 44 des Standrohrs 30 verkürzt bzw. verlängert. Durch die Veränderung dieses Abstands 46 verändert sich die wirksame Federlänge.

Dieser Mechanismus läßt sich beispielsweise bei einer sogenannten Upside-Down-Gabel einsetzen.

Das Standrohr 30 kann zur Hinterraddämpfung auch beispielsweise eine Kolbenstange eines Hinterraddämpfers eines Fahrrades darstellen.

Es sei angemerkt, daß - insbesondere bei der Hinterraddämpfung - auch die Feder anstelle des Standrohres 30 bzw. der Kolbenstange zur Einstellung gedreht werden kann.

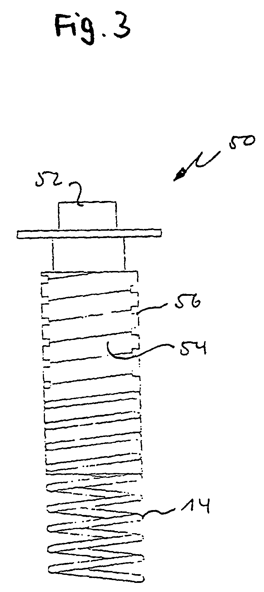

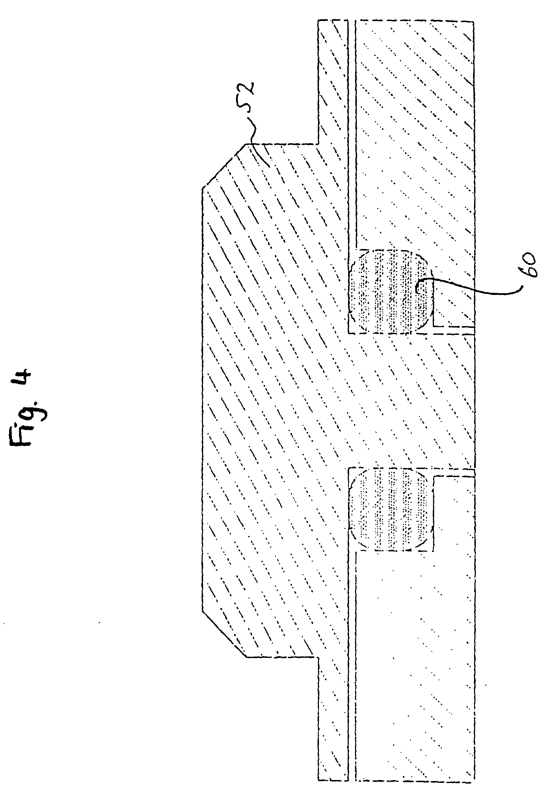

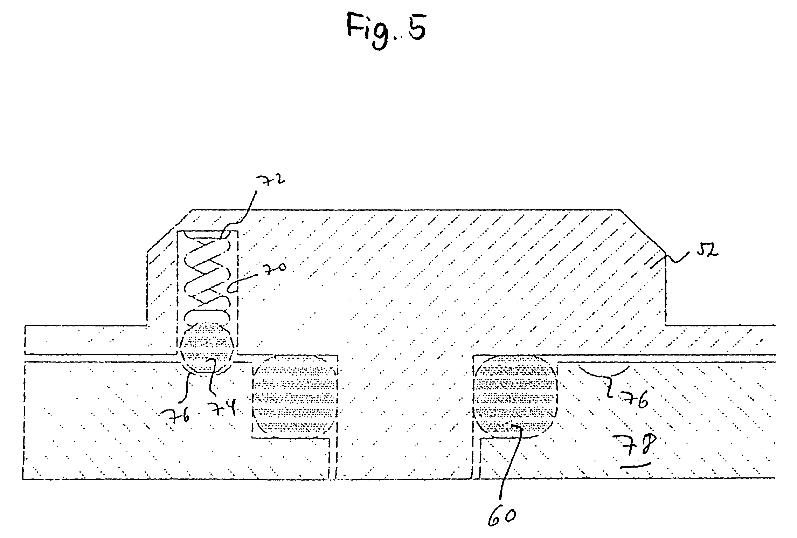

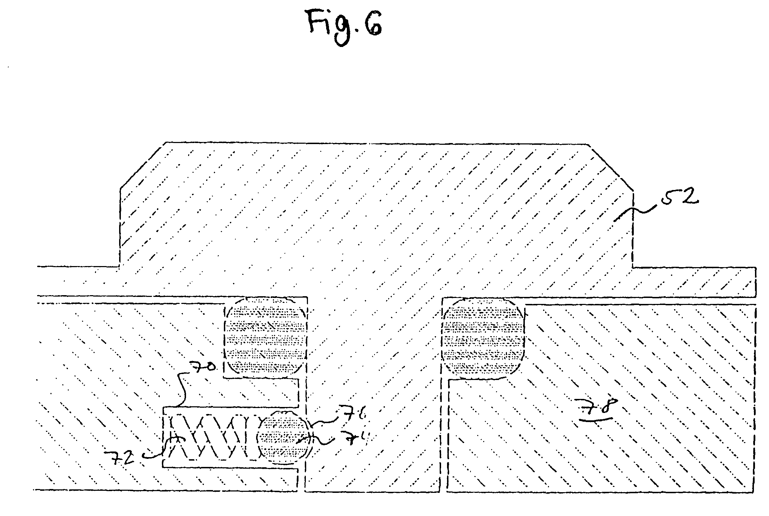

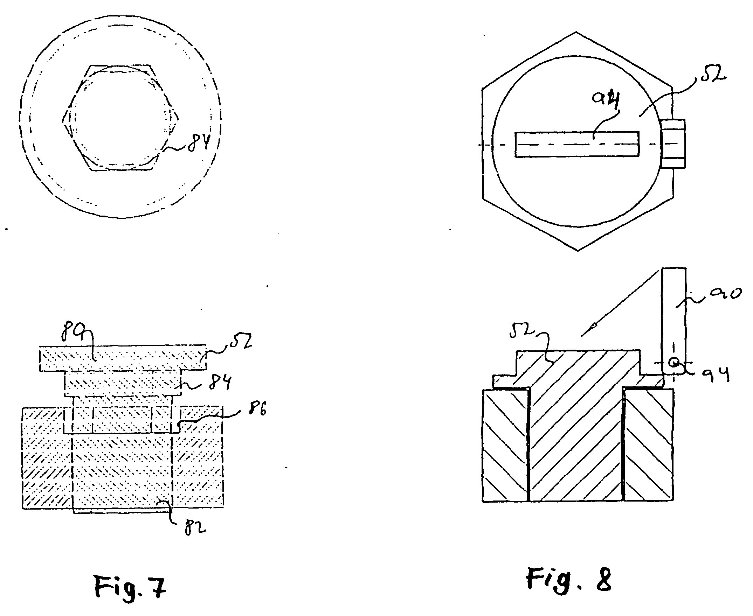

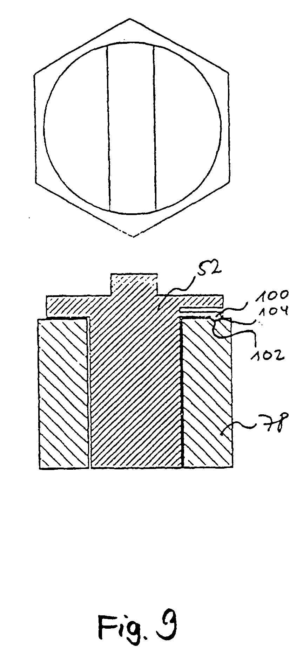

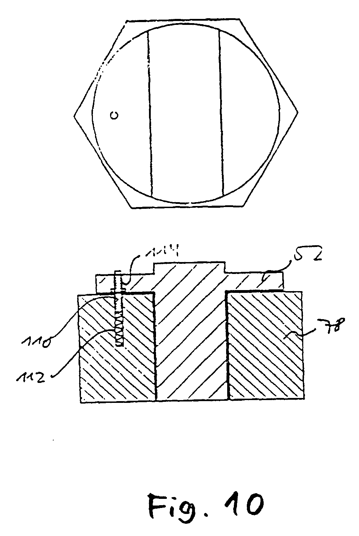

Fig. 3 zeigt eine dritte, beispielhafte Ausführungsform der Erfindung in schematischer Darstellung.

Die in Fig. 3 dargestellte Anordnung 50 ist beispielsweise im Gabelholm bzw. in einer Abschlußkappe eines Fahrrades angeordnet. Der Einstellknopf 52, der beispielsweise ein Einstellknopf an einer Gabel oder der Körper eines Stoßdämpfers oder einer in einer Gabel angeordneten Dämferpatrone ist, weist einen Schaft 54 auf, der auf seinem Umfang ein Gewinde 56 trägt. In dieses Gewinde 56 greift die Feder 14 ein. Je weiter der Schaft 54 in die Feder 14 hineingedreht wird, desto kürzer wird die wirksame Federlänge. In entsprechender Umkehrung vergrößert sich die wirksame Federlänge, wenn der Schaft 54 aus der Feder 14 herausgedreht wird.

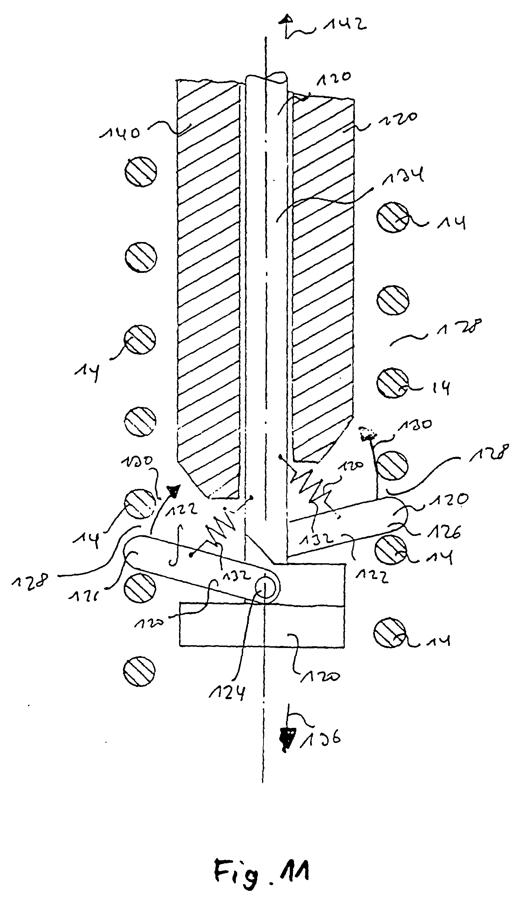

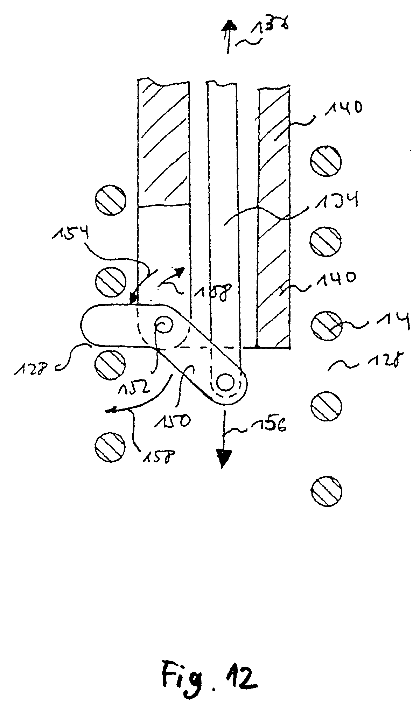

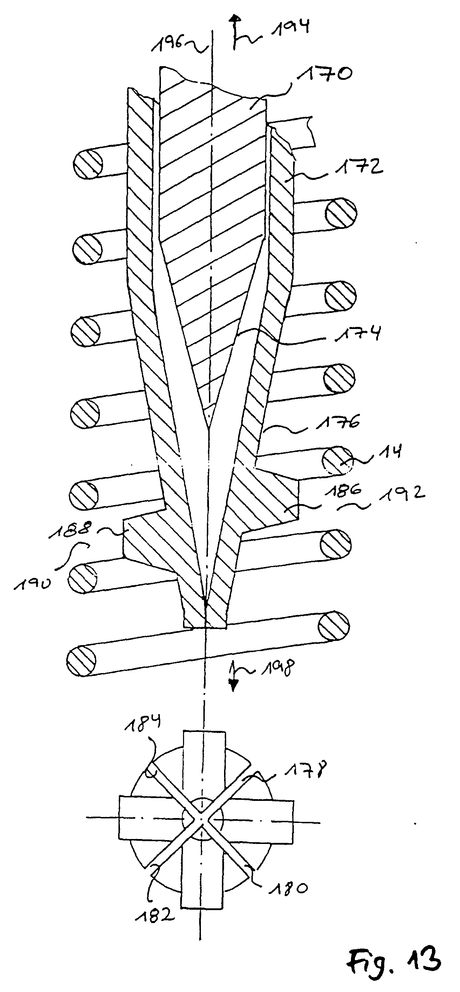

Fig. 4 zeigt eine vierte, beispielhafte Weiterbildung der Erfindung.

Ein O-Ring 60 stützt sich gegen den Einstellknopf 52, der hinsichtlich seiner Funktion und Ausbildung beispielsweise dem in Fig. 3 dargestellten Einstellknopf entspricht, ab. Der Einstellknopf bzw. die Einstelleinrichtung wird mittels Reibschlusses arretiert, welcher hier zwischen dem Einstellknopf 52 und dem O-Ring 60 vorliegt.

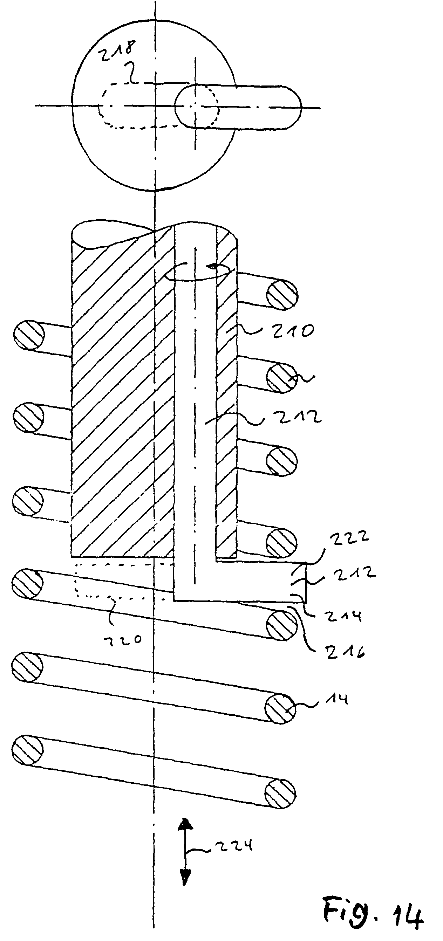

Fig. 5 zeigt eine fünfte, beispielhafte Weiterbildung der Erfindung in schematischer Darstellung.

Die Arretiereinrichtung ist hier in Form einer Kugelraste ausgebildet, die in axialer Richtung zum Einstellknopf 52 bzw. zur nicht dargestellten Feder 14, ausgerichtet ist. Die Kugelraste weist eine in eine Vertiefung 70 des Einstellknopfs 52 eingreifende Feder 72 auf, welche eine Kugel 74 belastet. Die Kugel 74 greift in eine Vertiefung 76, von denen mehrere auf dem Umfang des Elements 78 angeordnet sind, ein. Bei einer Verdrehung des Einstellkopfs 52 wandert die Kugel 74 zwischen den Vertiefungen 76. Bei Eingriff der Kugel 74 in eine Vertiefung 76 wird die zum Drehen des Einstellknopfs erforderliche Kraft deutlich erhöht, so daß der Knopf in einer im wesentlichen arretierten Position ist.

Fig. 6 zeigt eine sechste, beispielhafte Weiterbildung der Erfindung.

Dargestellt ist insbesondere auch eine Kugelraste, also eine Arretiereinrichtung, die auf dem Prinzip des Formschlusses beruht. Die Kugelraste ist dabei senkrecht zur Achse des Einstellknopfes 52 bzw. nicht dargestellten Feder 14 ausgerichtet.

Die Feder 72 greift in die Vertiefung 70 des Elements 78 ein und belastet die Kugel 74 derart, daß diese in Richtung der auf dem Umfang des Einstellknopfes 52 angeordneten Vertiefungen 76 gedrückt wird.

Fig. 7 zeigt eine siebte, beispielhafte Weiterbildung der Erfindung in schematischer Darstellung.

Dargestellt ist insbesondere ein Einstellknopf 52, der einen Abschnitt 80 aufweist, der gegenüber dem verbleibenden Bereich des Einstellknopfes bzw. einem Schaft 82 mit Gewinde axial beweglich und drehfest angeordnet ist. Dieser Abschnitt 80 weist einen Bereich 84 auf, der nicht rotationssymmetrisch und vorzugsweise unrund ist. Dieser Bereich 84 weist beispielsweise einen sechseckigen Querschnitt auf. In einer ersten, nicht dargestellten Axialposition des Einstellknopfs 52 greift dieser Bereich 84 in eine Vertiefung 86 ein, deren Querschnitt im wesentlichen ein Negativprofil des Abschnitts 84 darstellt. Hierdurch wird dem Einstell- bzw. Drehknopf 52 die Beweglichkeit in Drehrichtung genommen, so daß der drehfest mit dem Einstellknopf 52 verbundene Schaft 82 ebenfalls in der Drehbewegung gehemmt ist, und die Lage des nicht dargestellten Kraftübertragungsabschnitts auf der Feder 14 fixiert ist.

In einer zweiten, in Fig. 7 dargestellten Axialposition ist der Einstell- bzw. Drehknopf 52 in seiner Drehbeweglichkeit nicht blockiert, so daß über eine entsprechende Drehung beispielsweise ein nicht dargestellter Kraftübertragungsbereich der Feder 14 axial verschoben werden kann.

Fig. 8 zeigt eine achte, beispielhafte Weiterbildung in schematischer Darstellung.

Dargestellt ist hier insbesondere auch eine Arretiereinrichtung, die auf dem Prinzip des Formschlusses basiert. Der Dreh- bzw. Einstellknopf 52 ist gegenüber einem festen Bezugssystem drehbeweglich angeordnet. Diese Drehbeweglichkeit kann in eine fixierte Position überführt werden, in welcher die Lage eines Kraftübertragungsbereiches an der Federeinrichtung, der nicht dargestellt ist, fixiert ist.

Dieses ist dadurch realisiert, daß mit dem festen Bezugssystem drehfest verbundenes Element in eine formschlüssige Verbindung mit dem Einstellknopf 52 überführt wird. Beispielsweise wird die drehfest mit dem festen Bezugssystem verbundene Klappe 90 um den Drehpunkt 92 in die schlitzförmige Vertiefung 94 des Einstellknopfes 52 geklappt.

In Fig. 8 ist nur eine schlitzförmige Vertiefung 94 im Einstellknopf 52 dargestellt. Es können auch mehrere bzw. sternförmige Vertiefungen vorgesehen sein, so daß die Anzahl der Winkelpositionen, bei den der Einstellknopf fixiert werden kann erhöht wird.

Fig. 9 zeigt eine neunte, beispielhafte Weiterbildung der Erfindung in schematischer, teilgeschnittener Ansicht.

Der Einstell- bzw. Drehknopf 52 weist ein elastisches bzw. flexibles Element 100 mit einer Erhöhung 102 auf. Zur Aufnahme der Erhöhung 102 weist das Element 78 Vertiefung 104 auf, in welche das flexible Element 100 zur Arretierung einrasten kann. Das flexible Element 100 und/oder der Einstell- bzw. Drehknopf 52 ist beispielsweise aus Kunststoff gefertigt.

Fig. 10 zeigt eine zehnte, beispielhafte Weiterbildung der Erfindung in schematischer, teilgeschnittener Ansicht.

Insbesondere ist eine Arretiereinrichtung dargestellt. Ein federbelasteter Stift 110 wird von einer Vertiefung 112 in dem Element 78 aufgenommen und erstreckt sich in die Bohrung 114, welche am Drehknopf 52 angeordnet ist. Durch Zurückdrücken des Stiftes 110 gegen die Federkraft läßt sich die arretierte Position lösen.

Fig. 11 zeigt eine elfte, beispielhafte Ausführungsform der Erfindung in schematischer Darstellung.

Die Einstelleinrichtung 120 bzw. die Kraftübertragungseinrichtung 122 weist über ein Gelenk 124 drehbeweglich gelagerte Laschen 126 auf. In einer ersten, eingerasteten Position greifen diese Laschen 126 in die Zwischenräume 128 der Federwindungen der Feder 14 ein. Hierdurch wird eine axiale Verschieblichkeit zwischen der Kraftübertragungseinrichtung 122 und der Feder 14 im wesentlichen blockiert.

In einer zweiten Position sind die Laschen 126 in Richtung der Pfeile 130 geklappt, so daß sie radial innenliegend bzw. innerhalb der Windungen der Feder 14 angeordnet sind. In dieser zweiten Position ist eine Axialverschiebung zwischen der Kraftübertragungseinrichtung 122 und der Feder 14 möglich.

Die Sperrklinken bzw. Laschen 126 sind über Zugfedern 132 sowie über die Gelenke 124 mit der Steuerstange 134 verbunden. Wenn die Steuerstange in Richtung des Pfeils 136 gedrückt wird, bewegen sich die Sperrklinken bzw. Laschen 126 um die Gelenke 124 radial nach innen, so daß eine Verschiebung der Kraftübertragungseinrichtung gegenüber der Feder 14 ermöglicht wird.

Zur Verschiebung der Kraftübertragungseinrichtung 122 wird die Steuerstange 134 gemeinsam mit der Hülse 140 in Richtung des Pfeils 136 oder in Richtung des Pfeils 142 verschoben. Nach Erreichen der gewünschten Position in Axialrichtung der Feder 14 wird die Steuerstange 134 gegenüber der Hülse 140 in Richtung des Pfeils 142 verschoben, so daß sich die Sperrklinken bzw. Zungen bzw. Laschen 126 um die Gelenke 124 nach außen bewegen und somit in die Zwischenräume 128 der Federwindungen der Feder 14 wieder eingreifen.

Fig. 12 zeigt eine zwölfte, beispielhafte Ausführungsform der Erfindung in schematischer Darstellung.

An die Steuerstange 134 ist ein Winkelelement 150 angelenkt Dieses Winkelelement ist ferner gegenüber der Hülse 140 über ein Gelenk 152 drehbar gelagert.

Wenn die Steuerstange 134 in Richtung des Pfeils 136 durch die Hülse 140 gezogen wird, dreht sich das Winkelelement 150 in Richtung des Pfeils 154 nach innen, so daß die Einheit aus Hülse 140 und Steuerstange 134 in Richtung des Pfeils 136 oder in Richtung des Pfeils 156 verschoben werden kann. Wenn die angestrebte Axialposition erreicht ist, wird die Steuerstange 134 gegenüber der Hülse 140 in Richtung des Pfeils 156 gedrückt, so daß das Winkelelement 150 in Richtung des Pfeils 158 zurückbewegt wird und sich wieder in einem Zwischenraum 128 der Federwindungen der Feder 14 legt, so daß die Kraftübertragungs- bzw. Einstelleinrichtung gegenüber der Feder 14 in axialer Richtung im wesentlichen fixiert ist.

Fig. 13 zeigt eine dreizehnte, Ausführungsform in schematischer, teilgeschnittener Ansicht.

Die Steuerstange 170 ist innerhalb des hohlförmigen Bauteils 172 verschieblich angeordnet. Die Steuerstange 170 sowie das hohle Bauteil 172 laufen in ihren jeweiligen Endbereichen 174 bzw. 176 keilförmig zu. In diesem Endbereich ist das hohle Bauteil mit Schlitzen 178, 180, 182, 184 versehen. Wenn die Steuerstange in das Ende 176 geführt wird, drückt sie ab einem bestimmten Punkt den Endbereich 176 nach außen, so daß sich die im Endbereich 176 angeordneten Vorsprünge 186, 188 in die Zwischenräume 190, 192 zwischen den Windungen der Feder 14 drükken. In dieser Position ist das hohle Bauteil 172 im wesentlichen gegenüber der Feder 14 in axialer Richtung fixiert, so daß einen Beweglichkeit zwischen der Feder 14 und dem hohlen Bauteil 172 im wesentlichen verhindert wird. Vorzugsweise wird die Steuerwelle 170 in dieser Position gegenüber dem hohlen Bauteil 172 fixiert, so daß auch hier eine Relativbewegung nicht möglich ist.

Bevorzugt ist auch, daß die Steuerwelle 170 bzw. das hohle Bauteil 172 Axialführungen aufweist, welche eine Drehbeweglichkeit der Bauteile 170, 172 verhindert.

Besonders bevorzugt ist, daß das hohle Bauteil 172 ein Innengewinde aufweist und die Steuerwelle 170 ein Außengewinde aufweist, so daß die Steuerwelle schraubenförmig - und somit auch in axialer Richtung - innerhalb des hohlen Bauteils zur Verstellung beweglich ist. Zur Fixierung in einer Position können beispielsweise die bereits oben beschriebenen Arretiermechanismen für Drehknöpfe verwendet werden.

Wenn die Relativposition zwischen der Kraftübertragungseinrichtung bzw. den Vorsprüngen 186, 188 gegenüber den Windungen der Feder 14 in axialer Richtung verstellt werden soll, wird die Steuerwelle 170 in Richtung des Pfeils 194 gegenüber dem hohlen Bauteil 172 bewegt, so daß die einzelnen Endbereiche des geschlitzten Endbereichs 176 in Richtung der zentralen Achse 196 zurückschnappen und Vorsprünge 186, 188 somit aus den Zwischenbereichen der Windungen der Feder 14 herausrutschen. In dieser Position kann die Steuerwelle gemeinsam mit dem hohlen Bauteil in axialer Richtung gegenüber der Feder 14 verschoben werden, ehe die Steuerwelle 170 in der gewünschten Axialposition wieder in Richtung des Pfeils 198 gegenüber dem hohlen Bauteil 172 bewegt wird, so daß sich die Vorsprünge 176, 180 wieder in die Zwischenräume 190, 192 der Windungen der Feder 14 legen und somit eine Axialbeweglichkeit zwischen dem hohlen Bauteil 172 und der Feder 14 blockieren.

Besonders bevorzugt ist, daß die Oberfläche der Vorsprünge 186, 188 radial nach außen gerichtet aufeinander zuläuft, beispielsweise konisch ausgebildet ist.

Fig. 14 zeigt einen vierzehnte, beispielhafte Ausführungsform der Erfindung in schematischer Darstellung.

Innerhalb der Steuerwelle 210 ist ein Drehteil 212 gelagert. Dieses Drehteil 212 weist eine Lasche 214 auf, die in einer ersten Drehposition radial nach außen gerichtet ist und hierbei in einen Zwischenbereich 216 der Windungen der Feder 14 eingreift und somit eine axiale Beweglichkeit der Steuerwelle 210 bzw. des Drehteils 212 gegenüber den Windungen der Feder 14 in axialer Richtung blockiert.

In einer zweiten Drehposition, die beispielhaft durch die gestrichelten Linien 218, 220 angedeutet ist, ist die Lasche 214 im wesentlichen nach innen gedreht, so daß sie aus den Zwischenräumen 216 der Windungen der Feder 14 herausbewegt ist und eine Relativbeweglichkeit zwischen der Kraftübertragungseinrichtung 222 bzw. der Steuerwelle 210 und den Windungen der Feder 14 bzw. der Feder 14 in axialer Richtung nicht unterbindet. In dieser Situation kann die Steuerwelle in axialer Richtung, die durch den Doppelpfeil 224 angedeutet ist, verschoben werden. In einer gewünschten Relativposition zwischen der Steuerwelle 210 bzw. der Kraftübertragungseinrichtung 222 und der Feder 14 bzw. den Windungen der Feder 14 kann das Drehteil wieder nach außen gedreht werden, so daß die Lasche 214 wieder in den Zwischenraum 216 der Windungen der Feder 14 eingreift und somit eine axiale Beweglichkeit zwischen dem Kraftübertragungsbereich 222 bzw. der Steuerwelle 210 und den Windungen der Feder 14 bzw. der Feder 14 blockiert.

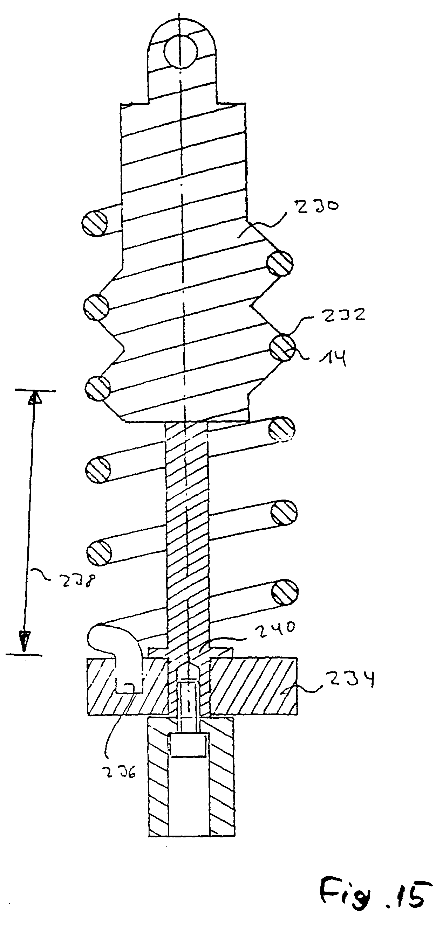

Fig. 15 zeigt eine fünfzehnte, Ausführungsform in schematischer Darstellung.

Der Stoßdämpfer 230 ist mit seinem äußeren Bereich 232 in di.e Feder 14 bzw. in die Windungen der Feder 14 gedreht. Die Feder 14 ist an dem Drehteil bzw. Handrad 234 mit ihrem einen Ende 236 fixiert. Bei einer Drehung des Handrads 234 verschiebt sich die axiale Relativposition zwischen dem Stoßdämpfer 230 und der Feder 14, so daß sich die wirksame Federlänge 238 bzw. die freie Federlänge 238 verändert.

Die Kolbenstange 240 ist mit dem Handrad 234 vorzugsweise fest verbunden.

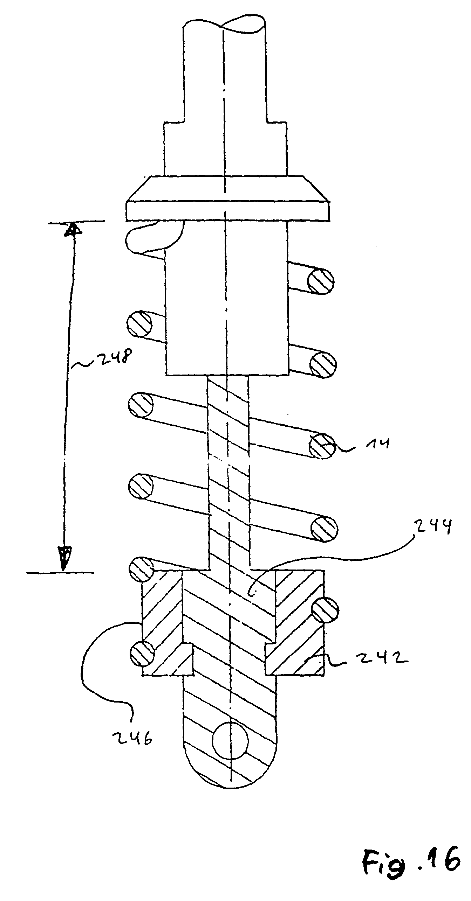

Fig. 16 zeigt eine sechzehnte, Ausführungsform in schematischer Darstellung.

Das Drehteil 242 ist drehbar gegenüber der Kolbenstange 244 gelagert und nimmt in seinem auf dem Außenmantel 246 angeordneten Gewinde die Feder 14 auf. Ein Drehung des Drehteils 242 verändert die wirksame Federlänge 248.

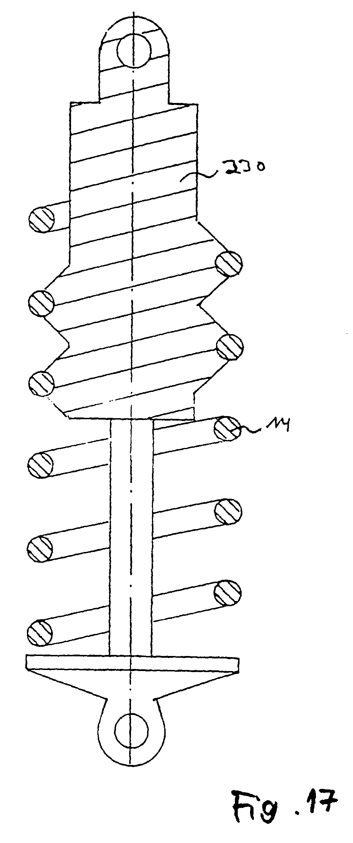

Fig. 17 zeigt eine siebzehnte, Ausführungsform mit Stoßdämpfer 230, die eine beispielhafte Alternative zur Ausführungsform gem. Fig. 15 darstellt.

Bei dieser Ausführungsform wird die Feder 14 zur Verstellung der Lage eines Kraftübertragungsbereichs gedreht.

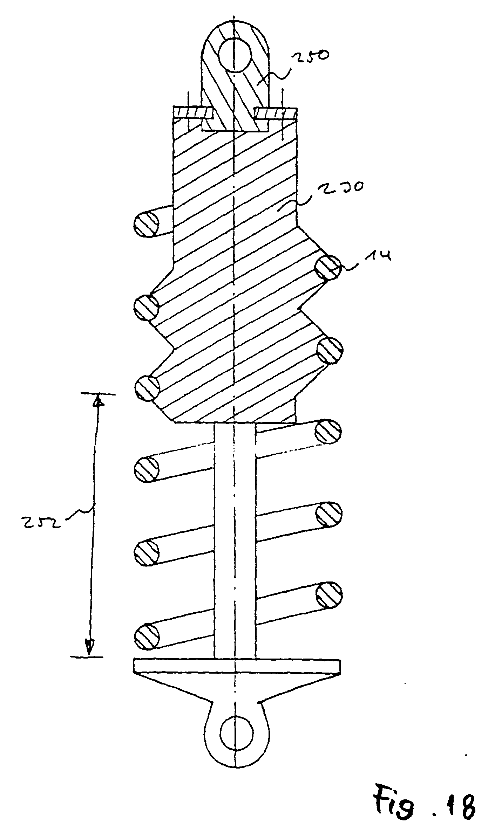

Fig. 18 zeigt eine achtzehnte, Ausführungsform in schematischer Darstellung.

Der Dämpfer 230 ist drehbar gegenüber dem Anschlußstück 250 gelagert und greift von innen in die Feder 14 ein. Durch Verdrehen des Dämpfers 230 gegenüber dem Anschlußstück 250 sowie der Feder 14 kann die wirksame Federlänge 252 eingestellt werden.

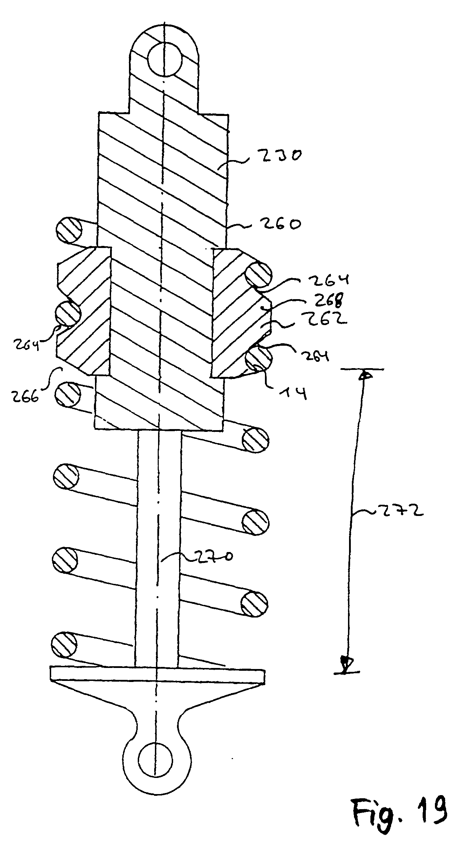

Fig. 19 zeigt eine neunzehnte, Ausführungsform in schematischer Darstellung.

Auf der Außenoberfläche 260 des Dämpfers 230 ist ein Drehteil 262 drehbeweglich angeordnet, welches mit Vertiefungen 264 in die Windungen der Feder 14 eingreift. In die Windungszwischenräume 266 greifen Erhöhungen 268 des Drehteils 262 ein.

Durch Verdrehen des Drehteils 262 um die zentrale Achse 270 kann die wirksame Federlänge 272 eingestellt bzw. verstellt werden.

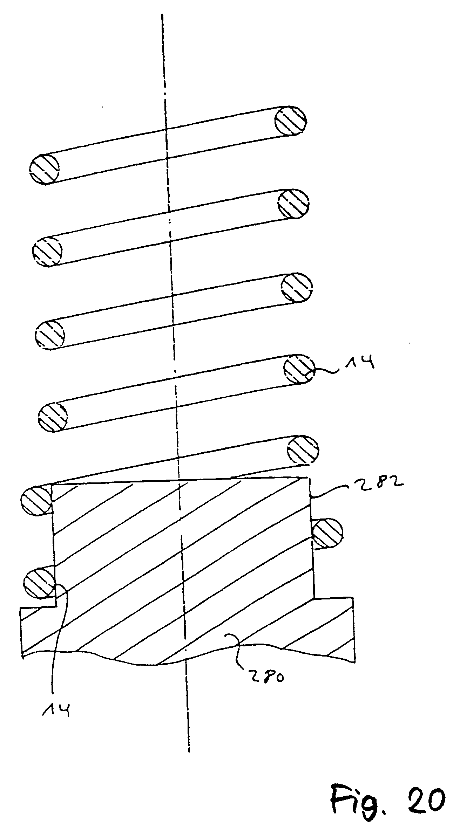

Fig. 20 zeigt eine zwanzigste, beispielhafte Weiterbildung der Erfindung in schematischer Darstellung.

In dieser Darstellung ist eine Verdrehsicherung für eine Feder 14 dargestellt, die beispielsweise an einem Umbauteil 280 gelagert ist. Die Feder 14 umgibt einen runden Bereich bzw. Endbereich 282 des Umbauteils 280. Dabei ist die Feder 14 aufgeweitet, so daß an den Berührungsflächen zwischen der Feder 14 und dem Endbereich 282 des Umbauteils 280 eine erhöhte Haftreibung auftritt, die eine Verdrehung der Feder 14 im Endbereich der Feder gegenüber dem Umbauteil 280 verhindert.

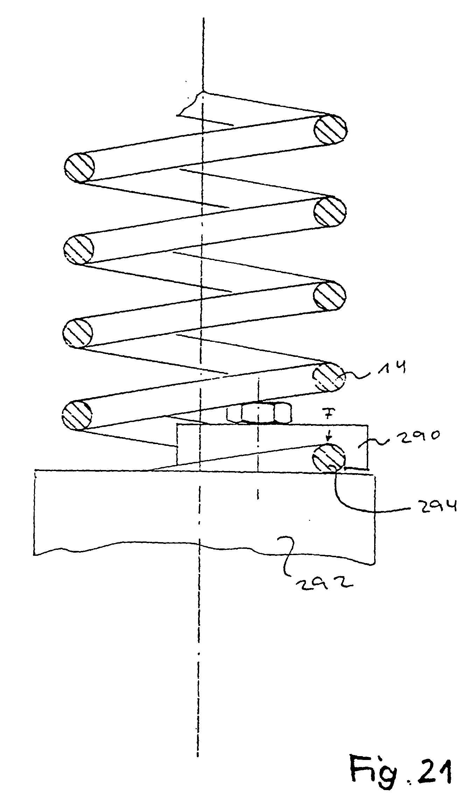

Fig. 21 zeigt eine einundzwanzigste, beispielhafte Weiterbildung der Erfindung in schematischer Darstellung.

Als Verdrehsicherung ist ein Aufsatz 290 auf ein Umbauteil 292 verschraubt. Zwischen dem Aufsatz 290 und dem Umbauteil 292 wird ein Ende 294 der Feder 14 eingeklemmt.

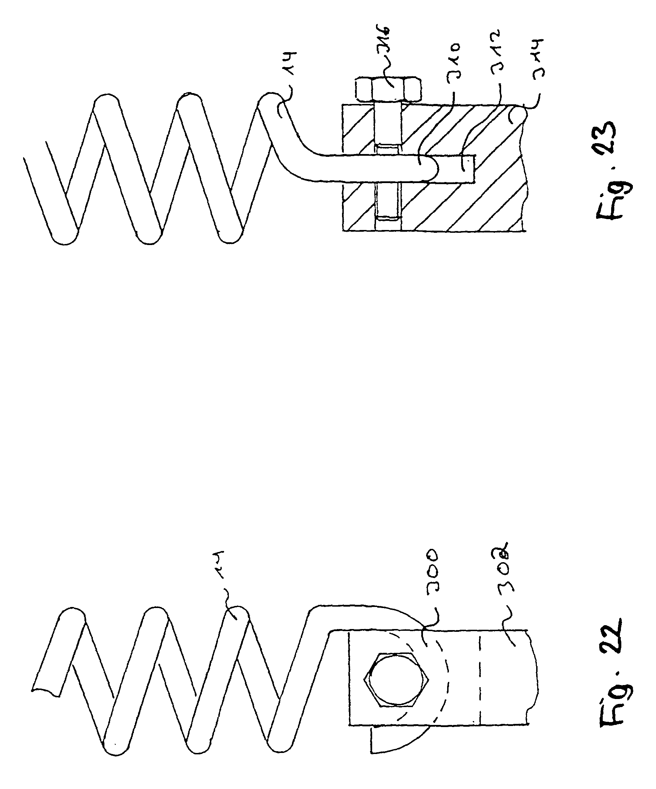

Fig. 22 zeigt eine zweiundzwanzigste, beispielhafte Weiterbildung der Erfindung.

Die Feder 14 weist an ihrem Ende eine halboffene Öse 300 auf, welche mit dem Umbauteil 302 verschraubt ist, so daß die Feder 14 gegenüber dem Umbauteil 302 gegen Verdrehung gesichert ist.

Fig. 23 zeigt eine dreiundzwanzigste beispielhafte Weiterbildung der Erfindung in schematischer Darstellung.

Eine Öse 310, die im Endbereich der Feder 14 angeordnet ist, greift in einen Schlitz 312 des Umbauteils 314 ein und ist dort mittels einer Schraube 316 fixiert, so daß die Feder 14 gegenüber dem Umbauteil 314 gegen Verdrehung gesichert ist.

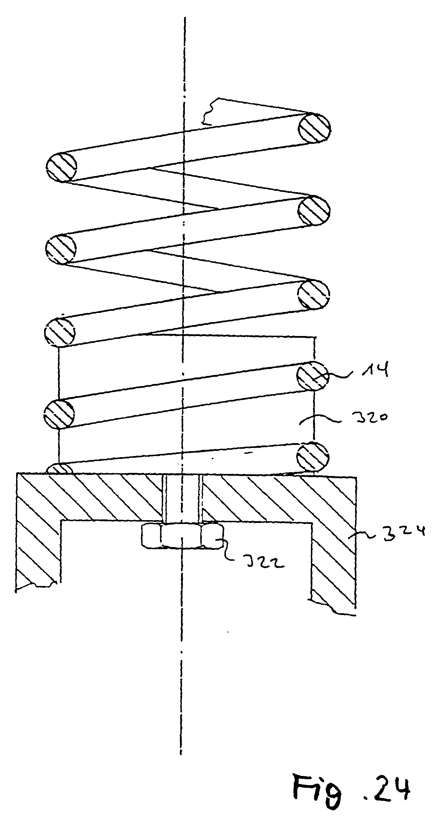

Fig. 24 zeigt eine vierundzwanzigste, beispielhafte Weiterbildung der Erfindung in schematischer Darstellung.

Die Feder 14 ist in ihrem Endbereich auf den Block 320 aufgeschraubt.

Der Block 320 ist mittels einer Schraube 322 mit dem Umbauteil 324 verbunden, so daß über eine Keilwirkung die Feder 14 geklemmt ist.

Es sei angemerkt, daß in den - insbesondere anhand der Fig. beschriebenen Ausführungsbeispielen - z.B. zur Vermeidung eines Drehknopfes - beispielsweise das Standrohr oder das Tauchrohr einer Fahrradgabel gedreht werden kann. Beispielsweise kann bei Vorhandensein eines externen Dämpfers der Federteller oder der Dämpferkörper zur Verstellung der wirksamen Federlänge gedreht werden.

Bevorzugt ist auch, daß ein Drehknopf die Feder oder das entsprechende Gegenstück zur Verstellung über ein Schneckengetriebe dreht, wobei dessen Selbsthemmung sich positiv auf die Sicherheit der Einstellung auswirkt.

Bevorzugt ist auch, daß ein Dreh- bzw. Einstellknopf über einen entriegelbaren Freilauf gesichert wird, der beispielsweise in Richtung einer Verlängerung des wirksamen Federwegs freigeschaltet ist.

### Bezugszeichenliste

- 10: Dämpfer
- 12: Dämpferdeckel
- 14: Feder
- 16: Ende von 14
- 18: Drehkappe
- 20: Achse
- 22: Abstand
- 24: Maß
- 26: Maß
- 30: Standrohr
- 32: Hülse
- 34: Innengewinde
- 36: Ende
- 38: Boden von 40
- 40: Gabelholms
- 42: Pfeils
- 44: Ende
- 46: Abstand
- 50: Anordnung
- 52: Einstellknopf
- 54: Schaft
- 56: Gewinde
- 60: O-Ring
- 70: Vertiefung
- 72: Feder
- 74: Kugel
- 76: Vertiefung
- 78: Elements
- 80: Abschnitt
- 82: Schaft
- 84: Bereich
- 86: Vertiefung
- 90: Klappe
- 100: flexibles Element
- 102: Erhöhung
- 104: Vertiefung
- 110: federbelasteter Stift
- 112: Vertiefung
- 114: Bohrung
- 120: Einstelleinrichtung
- 122: Kraftübertragungseinrichtung
- 124: Gelenk
- 126: Lasche
- 128: Zwischenraum
- 130: Pfeil
- 132: Zugfeder
- 134: Steuerstange
- 136: Pfeil
- 140: Hülse
- 142: Pfeil
- 150: Winkelelement
- 152: Gelenk
- 154: Pfeil
- 156: Pfeil
- 158: Pfeil
- 170: Steuerstange
- 172: hohlförmiges Bauteil
- 174: Endbereich
- 176: Endbereich
- 178: Schlitz
- 180: Schlitz
- 182: Schlitz
- 184: Schlitz
- 186: Vorsprung
- 188: Vorsprung
- 190: Zwischenraum
- 192: Zwischenraum
- 194: Pfeil
- 196: zentrale Achse
- 198: Pfeil
- 210: Steuerwelle
- 212: Drehteil
- 214: Lasche
- 216: Zwischenbereich
- 218: gestrichelte Linie
- 220: gestrichelte Linie
- 222: Kraftübertragungseinrichtung
- 230: Stoßdämpfer
- 232: äußerer Bereich von 230
- 234: Handrad
- 236: Ende
- 238: freie Federlänge
- 240: Kolbenstange
- 242: Drehteil
- 244: Kolbenstange
- 246: Außenmantel von 242
- 248: wirksame Federlänge
- 250: Anschlußstück
- 252: wirksame Federlänge
- 260: Außenoberfläche
- 262: Drehteil
- 264: Vertiefung
- 266: Windungszwischenraum
- 268: Erhöhung
- 270: zentrale Achse
- 272: Federlänge
- 280: Umbauteil
- 282: Endbereich von 280
- 290: Aufsatz
- 292: Umbauteil
- 294: Ende von 14
- 300: halboffene Öse
- 302: Umbauteil
- 310: Öse
- 312: Schlitz
- 314: Umbauteil
- 316: Schraube
- 320: Block
- 322: Schraube
- 324: Umbauteil

## Patentansprüche

1. Federeinrichtung, mit
wenigstens einer Feder (14), in welche äußere Kräfte einleitbar sind, wobei diese Kräfte an Kraftübertragungsabschnitten in eine Oberfläche der Feder (14) einleitbar sind,
wenigstens einer Kraftübertragungseinrichtung (120,122,135,150,212), welche die wenigstens eine Feder (14) zur Übertragung der äußeren Kräfte wenigstens in einem Kontaktbereich eines Kraftübertragungsabschnittes kontaktiert,
**dadurch gekennzeichnet, dass** die Kraftübertragungseinrichtung (120,122,135,150,212) eine Einstelleinrichtung (140,210) zur Einstellung einer axialen Lage eines Kraftübertragungsabschnittes auf der Federoberfläche aufweist,
die Einstelleinrichtung (140,210) bei der Einstellung der axialen Lage des einen Kraftübertragungsabschnitts entlang einer zweidimensionalen oder einer linearen Bahn bewegt wird, um den Kontakt zwischen der Kraftübertragungseinrichtung und der Feder im Kontaktbereich herzustellen.

2. Federeinrichtung nach Anspruch 1,
bei der von der Einstelleinrichtung (140,210) die wirksame Beabstandung zwischen dem Kraftübertragungsabschnitten bei im wesentlichen konstanter Federspannung einstellbar ist.

3. Federeinrichtung nach wenigstens einem der vorangehenden Ansprüche,
bei der ein radial innerhalb von Federwindungen liegender Bereich oder ein radial außerhalb von Federwindungen liegender Bereich der Kraftübertragungseinrichtung (120,122,135,150,212) einen in wenigstens einen Windungszwischenraum (128) erstreckenden Bereich aufweist, über welchen der den Kontakt zwischen der Kraftübertragungseinrichtung und der Feder im Kontaktbereich hergestellt wird.

4. Verwendung einer Federeinrichtung gemäß einem der Ansprüche 1 bis 3 zu einer Radfederung eines Fahrrades.

5. Federeinrichtung für ein Fahrrad, mit
wenigstens einer Schraubenfeder (14), in welche äußere Kräfte einleitbar sind, wobei diese Kräfte an Kraftübertragungsabschnitten in eine Oberfläche der Schraubenfeder (14) einleitbar sind,
wenigstens einer Kraftübertragungseinrichtung (12,32,54), welche die wenigstens eine Schraubenfeder (14) zur Übertragung der äußeren Kräfte wenigstens in einem Bereich eines Kraftübertragungsabschnittes kontaktiert,
wobei die Kraftübertragungseinrichtung (12,32,54) eine Einstelleinrichtung (18,30,52) zur Einstellung einer axialen Lage eines Kraftübertragungsabschnittes auf der Schraubenfederoberfläche aufweist,
**dadurch gekennzeichnet, dass** die Kraftübertragungseinrichtung (12,32,54) in zumindest einem Abschnitt als ein Schraubengewinde ausgestaltet ist, welcher Abschnitt mit mindestens einer Schraubenfederwindung der Schraubenfeder (14) als Schrauben-Gewinde-Verbindung wirkt derart, dass bei der Einstellung der axialen Lage des einen Kraftübertragungsabschnitts die Kraftübertragungseinrichtung relativ zu der Schraubenfeder (14) entlang einer Schraubenfederlängsachse bewegt wird, wobei die Relativbewegung durch Drehen der Schraubenfeder oder der Einstelleinrichtung (18,30,52) bewirkt wird und wobei die Länge des Schraubengewindeabschnitts, welcher bei der Einstellung der axialen Lage als die Schrauben-Gewinde-Verbindung wirkt, konstant ist.

6. Federeinrichtung nach Anspruch 5,
bei der von der Einstelleinrichtung (18,30,52) eine wirksame Beabstandung zwischen den Kraftübertragungsabschnitten bei im wesentlichen konstanter Federspannung einstellbar ist.

7. Federeinrichtung nach einem der vorangehenden Ansprüche,
bei der die axiale Lage des Kraftübertragungsabschnitts der Kraftübertragungseinrichtung von der Einstelleinrichtung (18,30,52) stufenlos einstellbar ist.

8. Federeinrichtung nach einem der Ansprüche 5 oder 6,
bei der eine Beabstandung der Kraftübertragungsabschnitte von der Einstelleinrichtung (18,30,52) einstellbar ist auf 60mm, insbesondere bei einem steilen Lenkwinkel und einer straffen Federabstimmung, oder auf 120mm, insbesondere bei einem flachen Lenkwinkel und einer weichen Federabstimmung.

9. Federeinrichtung nach einem der vorangehenden Ansprüche,
bei der die Feder eine Schraubenfeder ist, deren Windungen einen im wesentlichen schlauchförmigen Bereich aufspannen, wobei sich die Kraftübertragungseinrichtung (12,32,54) und/oder die Einstelleinrichtung (18,30,52) wenigstens teilweise in das Innere dieses schlauchförmigen Bereichs erstreckt.

10. Federeinrichtung nach Anspruch 9,
bei der die Kraftübertragungseinrichtung im Inneren des schlauchförmigen Bereichs Bereiche aufweist, über welche sie mit den Windungen der Feder (14) gekoppelt ist, wobei die Lage dieser Koppelstellen in Federachsrichtung zwischen der Feder (14) und der Kraftübertragungseinrichtung von der Einstelleinrichtung (18,30,52) einstellbar ist.

11. Federeinrichtung nach einem der vorangehenden Ansprüche,
bei der Windungen der Feder (14) einen im wesentlichen schlauchförmigen Bereich aufspannen, wobei
die Kraftübertragungseinrichtung (12,32,54) die Windungen der Feder (14) wenigstens teilweise radial außenliegend umgibt,
dieser radial außen liegende Bereich mit den Federwindungen gekoppelt ist, und
wobei die Lage dieser Koppelbereiche zwischen den Federwindungen und der in Richtung der Federachse (20) einstellbar ist.

12. Federeinrichtung nach einem der vorangehenden Ansprüche,
mit einer Arretiereinrichtung zur Arretierung einer vorbestimmten Relativposition zwischen der Kraftübertragungseinrichtung und der Feder (14) oder der Einstelleinrichtung (18,30,52) und der Feder (24). Kraftübertragungseinrichtung

13. Federeinrichtung nach Anspruch 12,
bei der die Arretiereinrichtung wenigstens ein federbelastetes Schnappelement aufweist.

14. Federeinrichtung nach einem der vorangehenden Ansprüche,
mit wenigstens einer Verdrehsicherungseinrichtung, über welche die Feder (14) in einem Krafteinleitungsabschnitt mit einem Umbauteil gekoppelt ist.

15. Federeinrichtung nach einem der vorangehenden Ansprüche 5-14,
mit einer Ausgleichseinrichtung zum Ausgleich einer belastungsabhängig zusätzlichen Änderung eines Abstands zwischen den Kraftübertragungsabschnitten,
welche Ausgleichseinrichtung mit der Kraftübertragungseinrichtung (12,32,54) unabhängig gegenüber der Relativbewegung der Kraftübertragungseinheit (12,32,54) entlang der Schraubenfederlängsachse gekoppelt ist.

16. Federeinrichtung nach einem der vorangehenden Ansprüche,
mit einer Dämpfereinrichtung (10, 230).

17. Federeinrichtung nach Anspruch 16,
bei der die Dämpfereinrichtung (10, 230) wenigstens teilweise von der Kraftübertragungseinrichtung und/oder der Einstelleinrichtung (18,30,52) umfasst ist.

18. Federeinrichtung nach wenigstens einem der Ansprüche 5 bis 17,
welche in einem Gabelholm oder in einem Gabelschaftrohr eines Fahrrades montiert ist,
wobei die Einstelleinrichtung (140,210) derart ausgebildet ist, dass die Schraubenfeder (14) in einem Drehknopf, der ein Drehknopf an einer Gabel ist, mit ihrem einen Ende fest gelagert ist, wobei der Drehknopf (18) mit der Schraubenfeder (14) um die Schraubenfederachse drehbar gelagert ist, und wobei die Schraubenfeder (14) an einer zweiten Stelle mit ihren Windungen in einem Gewinde eines Dämpferdeckels (12) liegt, und wobei eine Verdrehung des Drehknopfes (18) bewirkt, dass sich die Windungen der Schraubenfeder (14) schraubenförmig im Gewinde am Dämpferdeckel (12) verdrehen, so dass das Gewinde gegenüber der Schraubenfeder (14) wandert und hierdurch der Abstand zwischen dem mit dem Drehknopf (18) versehenen Schraubenfederende und dem Abschnitt der Schraubenfederwindungen, der momentan in dem Gewinde liegt, verändert wird, so dass die Schraubenfeder (14), ohne zusätzlich ge- oder entspannt zu werden, ihre wirksame Schraubenfederlänge verändert.

19. Federeinrichtung nach wenigstens einem der Ansprüche 5 bis 17,
welche in einem Gabelholm oder in einem Gabelschaftrohr eines Fahrrades montiert ist,
wobei die Einstelleinrichtung als Drehknopf (52) mit mit Innengewinde versehenem Rohrschaft (30) ausgebildet ist und von der Einstelleinrichtung die Beabstandung der Kraftübertragungsabschnitte an der Schraubenfeder (14) einstellbar ist, wobei die Schraubenfederspannung konstant gehalten wird und wobei der Drehknopf ein Drehknopf an einer Gabel ist, wobei ferner dieses Gewinde in die Windungen der Schraubenfeder (14) eingreift, so dass die Schraubenfeder (14) eine Art Gegengewinde bildet, und wobei sich die Schraubenfeder (14) an dem dem Drehknopf (52) abgewandten Ende gegen ein Umbauteil (40) abstützt, wobei sich ferner der Drehknopf (52) samt Schaft durch Verdrehung des Drehknopfes (52) relativ vom Umbauteil wegdrückt oder sich relativ zum Umbauteil (40) annähert und wobei sich hierbei das mit dem Einstellknopf (52) verbundene Gewinde weiter in die Schraubenfeder (14) hinein- oder herausdreht, so dass sich die wirksame Schraubenfederlänge verändert, und wobei das Umbauteil gegenüber dem Einstellknopf (52) axialbeweglich angeordnet ist, so dass eine durch den Einstellvorgang bedingte Veränderung der Schraubenfederspannung im Bereich der jeweils wirksamen Schraubenfederlänge vermieden wird.

20. Federeinrichtung nach wenigstens einem der Ansprüche 5 bis 17,
welche in einem Gabelholm oder in einem Gabelschaftrohr eines Fahrrades montiert ist,
wobei die Einstelleinrichtung als Drehknopf mit mit Außengewinde (56) versehenem Schaft (54) ausgebildet ist und von der Einstelleinrichtung die Beabstandung der Kraftübertragungsabschnitte an der Schraubenfeder (14) einstellbar ist, wobei die Schraubenfederspannung konstant gehalten wird und wobei der Drehknopf ein Drehknopf an einer Gabel ist, wobei ferner dieses Gewinde (56) in die Windungen der Schraubenfeder (14) eingreift, so dass die Schraubenfeder (14) eine Art Gegengewinde bildet, und wobei sich die Schraubenfeder (14) an dem dem Drehknopf (52) abgewandten Ende gegen ein Umbauteil abstützt, wobei sich ferner der Drehknopf (52) samt Schaft (54) durch Verdrehung des Drehknopfes (52) relativ vom Umbauteil wegdrückt oder sich relativ zum Umbauteil annähert und wobei sich hierbei das mit dem Einstellknopf (52) verbundene Gewinde (56) weiter in die Schraubenfeder (14) hinein- oder herausdreht, so dass sich die wirksame Schraubenfederlänge verändert, und wobei das Umbauteil gegenüber dem Einstellknopf (52) axialbeweglich angeordnet ist, so dass eine durch den Einstellvorgang bedingte Veränderung der Schraubenfederspannung im Bereich der jeweils wirksamen Schraubenfederlänge vermieden wird.

21. Federeinrichtung nach wenigstens einem der Ansprüche 5 bis 17,
welche in einem Gabelholm oder in einem Gabelschaftrohr eines Fahrrades montiert ist,
wobei ein drehbar gelagertes Standrohr (30) des Fahrrades in seinem nach unten gerichteten Bereich ein Innengewinde (34) aufweist oder mit einem Bauteil (32) fest verbunden ist, welches ein Innengewinde (34) aufweist, und von diesem Innengewinde (34) eine Schraubenfeder (14) aufnehmbar ist, so dass die Schraubenfeder (14) mit dem Innengewinde (34) eine Art Schrauben-Mutter-Verbindung bildet, wobei sich die Schraubenfeder (14) an einem Ende gegenüber einem gegenüber dem Standrohr (30) axialverschieblich gelagerten Gabelholm (40) oder einem damit fest verbundenen Bauteil abstützt und ein Drehen des Standrohrs (32) bewirkt, dass sich die Feder (14), die eine Art Außengewinde darstellt, in dem Innengewinde (34) des Standrohrs (32) bewegt, so dass die wirksame Federlänge, also die Länge zwischen dem Windungsbereich der Feder (14), der in dem Innengewinde (34) des Standrohrs (32) aufgenommen wird, und der Abstützung der Feder (14) am Gabelholm (40) verändert und die wirksame Federlänge verändert wird, ohne dass die Vorspannung der Feder (14) dabei im wirksamen Federlängenbereich verändert wird.

## Claims

1. Spring means, with at least one spring (14), into which outside forces can be inserted, whereby these forces can be inserted at force transmission sections into a surface of the spring (14), at least one force transmission means (120, 122, 135, 150, 212), which contacts the at least one spring (14) for transmission of the outside forces at least within a contact area of a force transmission section, **characterised in that** the force transmission means (120, 122, 135, 150, 212) incorporates an adjustment means (140, 210) for the adjustment of an axial position of a force transmission section on the spring surface; where the adjustment means (140, 210) is moved along a two-dimensional or a linear path during the adjustment of the axial position of the one force transmission section in order to create the contact between the force transmission means and the spring within the contact area.

2. Spring means according to Claim 1, in which the effective distance between the force transmission sections is adjustable under a substantially constant spring force via the adjustment means (140, 210).

3. Spring means according to at least one of the preceding Claims, in which an area positioned radially within spring windings or an area positioned radially outside of spring windings of the force transmission means (120, 122, 135, 150, 212) incorporates an area extending into at least one interim winding space (128) via which the contact between the force transmission means and the spring within the contact area is created.

4. Use of a spring means according to one of the Claims 1 to 3 for the spring suspension of a bicycle.

5. Spring means for a bicycle, with at least one helical spring (14), into which external forces can be inserted, whereby these forces can be inserted at force transmission sections into a surface of the helical spring (14), at least one force transmission means (12, 32, 54), which contacts the at least one helical spring (14) for transmission of the external forces at least within one area of the force transmission section, whereby the force transmission means (12, 35, 54) incorporates an adjustment means (18, 30, 52) for the adjustment of an axial position of a force transmission section on the helical spring surface, **characterised in that** the force transmission means (12, 32, 54) takes the form of a helical thread within at least one section, said section acts with at least one helical spring thread of the helical spring (14) as a screw/thread connection in such a way that the force transmission means is moved relative to the helical spring (14) along a helical spring longitudinal axis during the adjustment of the axial position of the one force transmission section, whereby the relative movement is created by means of turning the helical screw of the adjustment means (18, 30, 52), and whereby the length of the screw thread section, which acts as the screw/thread connection during adjustment of the axial length, is constant.

6. Spring means according to Claim 5, in which an effective distance between the force transmission sections can be adjusted under substantially constant spring tension by the adjustment means (18, 30, 52).

7. Spring means according to one of the preceding Claims, in which the axial length of the force transmission section of the force transmission means of the adjustment means (18, 30, 52) is steplessly adjustable.

8. Spring means according to one of the preceding Claims 5 or 6, in which the distance of the force transmission sections from the adjustment means (16, 30, 52) can be adjusted to 60mm, especially at an acute steering angle and a tight spring setting, or to 120mm, especially at a flat steering angle and a soft spring setting.

9. Spring means according to one of the preceding Claims, in which the spring consists of a helical spring, whose windings tension a substantially hose-shaped area, whereby the force transmission means (12, 32, 54) and/or the adjustment means (18, 30, 52) extend at least in part into the interior of said hose-shaped area.

10. Spring means according to Claim 9, in which the force transmission means incorporates areas within the interior of the hose-shaped area via which the same can be coupled with the windings of the spring (14), whereby the position of these coupling positions is adjustable in spring axis direction between the spring (14) and the force transmission means by means of the adjustment means (18, 30, 52).

11. Spring means according to one of the preceding Claims, in which the windings of the spring (14) tension a substantially hose-shaped area, whereby the force transmission means (12, 32, 54) surrounds the windings of the spring (14) at least in part radially and externally, this radially and externally positioned area is coupled with the spring windings, and whereby the position of this coupling area between the spring windings and the force transmission means is adjustable in the direction of the spring axis (20).

12. Spring means according to one of the preceding Claims, with an arresting means for the arresting of a pre-determined relative position between the force transmission means and the spring (14) of the adjustment means (18, 30, 52) and the spring (14).

13. Spring means according to Claim 12, in which the arresting means incorporates at least one spring-loaded snap element.

14. Spring means according to one of the preceding Claims, with at least one anti-displacement means, via which the spring (14) is coupled with a conversion part within a force insertion section.

15. Spring means according to one of the preceding Claims 5-14, with a balancing means for the balancing of a load-dependent additional change of a distance between the force transmission sections, whereby said balancing means is coupled with the force transmission means (12, 32, 54) independent of relative movements of the force transmission means (12, 32, 54) along the helical spring axis.

16. Spring means according to one of the preceding Claims, with a damper means (10, 230).

17. Spring means according to Claim 16, in which the damper means (10, 230) is enclosed at least in part by the force transmission means and/or the adjustment means (18, 30, 52).

18. Spring means according to at least one of the Claims 5 to 17, which is assembled in one fork section or in one fork shaft pipe of a bicycle, whereby the adjustment means (140, 210) is formed in such a way that the helical screw (14) is rotatingly affixed within a turning head which is bearingly affixed with its one end, and the turning head (18) is rotatingly affixed with the helical screw (14) around the helical screw axis, and whereby the helical screw (14) is positioned with its windings inside a thread of a damper cover (12) at a second point, and whereby a turning of the turning head (18) effects that the windings of the helical screw (14) are turned helically within the thread of the damper cover (12), so that the thread moves in relation to the helical screw (14) and thereby changes the distance between the helical screw end equipped with the turning head (18) and the section of the helical screw windings which is momentarily positioned within the thread, so that the helical screw (14) changes its effective helical screw length without being further tensioned or relaxed.

19. Spring means according to at least one of the Claims 5 to 17, assembled within a fork section or within a fork section pipe of a bicycle, whereby the adjustment means takes the form of a turning switch (52) with a pipe shaft (30) equipped with an internal thread, and whereby the distance of the force transmission means on the helical screw (14) is adjustable with the adjustment means, whereby the helical screw tension remains constant, and whereby the turning switch is a turning switch on a fork, whereby this thread further engages the windings of the helical screw (14), so that the helical screw (14) forms a kind of counter thread, and whereby the helical screw (14) is supported against a conversion part (40) at the end facing away from the turning switch (52), whereby the turning switch (52) further relatively presses itself away from the conversion part or relatively moves towards the conversion part (40) together with the shaft by means of turning the turning switch (52), and whereby the thread connected with the adjustment switch (52) turns further into or out of the helical screw (14), so that the effective helical screw length is changed, and whereby the conversion part is axially moveably positioned in relation to the adjustment switch (52), so that a change of the helical screw tension within the area of the relevant effective helical screw spring length effected by the adjustment process is avoided.

20. Spring means according to at least one of the Claims 5 to 17, assembled within a fork section or within a fork shaft pipe of a bicycle, whereby the adjustment means takes the form of a turning switch with a shaft (54) equipped with an external thread (56), and whereby the distance of the force transmission section on the helical screw (14) is adjustable with the adjustment means, whereby the helical screw tension remains constant, and whereby the turning switch consists of a turning switch on a fork, whereby this thread (56) further engages the windings of the helical screw (14), so that the helical screw (14) forms a kind of counter thread, and whereby the helical screw (14) is supported against a conversion part at the end facing away from the turning switch (52), whereby the turning switch (52) further relatively presses itself away from the conversion part or relatively moves towards the conversion part together with the shaft (54) when the turning switch (52) is turned, whereby the thread (56) connected with the adjustment switch (52) moves further into or out of the helical screw (14), so that the effective helical screw length is changed, and whereby the conversion part is axially moveably positioned in relation to the adjustment switch (52), so that a change of the helical screw tension within the area of the relevant effective helical screw length effected by the adjustment process is avoided.

21. Spring means according to at least one of the Claims 5 to 17, assembled within a fork section or a fork shaft pipe of a bicycle, whereby a turnable upright pipe (30) of the bicycle incorporates an internal thread (34) within a downward facing section, or is fixedly attached to a component (32) which incorporates an internal thread (34), and where the said internal thread (34) receives a helical screw (14), so that the helical screw (14) forms a kind of screw/nut connection together with the internal thread (34), whereby the helical screw (14) is supported at one end against a fork section (40) that is axially displaceable in relation to the upright pipe (30), or against a component fixedly attached to the same, and effects a turning of the upright pipe (32), so that the spring (14) which represents a kind of external thread moves within the internal thread (34) of the upright pipe (32), so that the effective spring length, namely the length between the winding section of the spring (14) that is received into the internal thread (34) of the upright pipe (32), and the support of the spring (14) against the fork section (40) is changed, and the effective spring length is changed, without the pre-tensioning of the spring (14) changing the effective spring length section.

## Revendications

1. Ensemble ressort, comportant
au moins un ressort (14) dans lequel des forces extérieures peuvent être conduites, ces forces pouvant être conduites sur des sections de transmission de force dans une surface du ressort (14),
au moins un dispositif de transmission de force (120, 122, 135, 150, 212) qui établit un contact avec le au moins un ressort (14) pour transmettre des forces extérieures dans une zone de contact d'une section de transmission de force,
**caractérisé en ce que** le dispositif de transmission de force (120, 122, 135, 150, 212) comporte un dispositif de réglage (140, 120) pour régler une position axiale d'une section de transmission de force sur la surface du ressort,
le dispositif de réglage (140, 120) est déplacé lors du réglage de la position axiale d'une section de transmission de force le long d'une voie bidimensionnelle ou linéaire, afin d'établir le contact dans la zone de contact entre le dispositif de transmission de force et le ressort.

2. Ensemble ressort selon la revendication 1,
dans lequel l'espacement efficace entre la section de transmission de force peut être réglé par le dispositif de réglage lorsque la tension du ressort est sensiblement constante.

3. Ensemble ressort selon au moins l'une quelconque des revendications précédentes, dans lequel une zone se trouvant radialement à l'intérieur d'enroulements de ressort ou une zone se trouvant radialement à l'extérieur d'enroulements de ressort du dispositif de transmission de force (120, 122, 135, 150, 212) comporte une zone s'étendant dans au moins un espace intermédiaire de l'enroulement (128), sur laquelle le contact entre le dispositif de transmission de force et le ressort est établi dans la zone de contact.

4. Utilisation d'un ensemble ressort selon l'une quelconque des revendications 1 à 3 pour une suspension à ressort de la roue d'une bicyclette.

5. Ensemble ressort pour une bicyclette, comportant
au moins un ressort à boudin (14) dans lequel des forces extérieures peuvent être conduites, ces forces pouvant être conduites sur des sections de transmission de force dans une surface du ressort à boudin (14),
au moins un dispositif de transmission de force (12, 32, 54) qui établit un contact avec le au moins un ressort à boudin (14) pour transmettre des forces extérieures dans une zone d'une section de transmission de force,
**caractérisé en ce que** le dispositif de transmission de force (12, 32, 54) comporte un dispositif de réglage (18, 30, 52) pour régler une position axiale d'une section de transmission de force sur la surface du ressort à boudin,
le dispositif de réglage (12, 32, 54) est réalisé dans au moins une section sous forme de filetage de vis, laquelle section coopère avec au moins un enroulement de ressort à boudin du ressort à boudin (14) en tant que liaison du filetage de vis de sorte que le dispositif de transmission de force soit déplacé par rapport au ressort à boudin (14) lors du réglage de la position axiale de la section de transmission de force le long d'un axe longitudinal du ressort à boudin, le déplacement relatif étant provoqué par rotation du ressort à boudin ou du dispositif de réglage (18, 30, 52) et la longueur de la section du filetage de vis, qui agit lors du réglage de la position axiale en tant que liaison du filetage de vis, étant constante.

6. Ensemble ressort selon la revendication 5, dans lequel un espacement efficace entre les sections de transmission de force peut être réglé par le dispositif de réglage (18, 30, 52) lorsque la tension du ressort est sensiblement constante.

7. Ensemble ressort selon l'une quelconque des revendications précédentes, dans lequel la position axiale de la section de transmission de force du dispositif de transmission de force (18, 30, 52) peut être réglée en continu.

8. Ensemble ressort selon l'une quelconque des revendications 5 ou 6, dans lequel un espacement des sections de transmission de force peut être réglé à 60 mm par le dispositif de réglage (18, 30, 52), notamment en cas d'angle de direction obtus et de réglage du ressort de manière à ce qu'il soit fortement tendu, ou à 120 mm, notamment en cas d'angle de direction plat et de réglage du ressort de manière à ce qu'il soit souple.

9. Ensemble ressort selon l'une quelconque des revendications précédentes, dans lequel le ressort est un ressort à boudin, dont les enroulements étirent une zone sensiblement en forme de tube, le dispositif de transmission de force (12, 32, 54) et/ou le dispositif de réglage (18, 30, 52) s'étendant au moins partiellement à l'intérieur de cette zone en forme de tube.

10. Ensemble ressort selon la revendication 9, dans lequel le dispositif de transmission de force comporte à l'intérieur de la zone en forme de tube des zones par lesquelles il peut être relié aux enroulements du ressort (14), la position de ces parties de liaison pouvant être réglée par le dispositif de réglage (18, 30, 52) dans la direction de l'axe du ressort entre le ressort (14) et le dispositif de transmission de force.

11. Ensemble ressort selon l'une quelconque des revendications précédentes, dans lequel des enroulements du ressort (14) étirent une zone sensiblement en forme de tube, le dispositif de transmission de force (12, 32, 54) entourant les enroulements du ressort (14) de manière à ce qu'elle se trouve au moins partiellement radialement à l'extérieur, cette zone se trouvant radialement à l'extérieur étant reliée aux enroulements de ressort, et la position de ces zones de liaison pouvant être réglée entre les enroulements de ressort et le dispositif de transmission de force dans le sens de l'axe du ressort (20).

12. Ensemble ressort selon l'une quelconque des revendications précédentes, comportant un dispositif de blocage pour bloquer une position relative prédéterminée entre le dispositif de transmission de force et le ressort (14) ou le dispositif de réglage (18, 30, 52) et le ressort (14).

13. Ensemble ressort selon la revendication 12, dans lequel le dispositif de blocage comporte au moins un élément encliquetable commandé par ressort.

14. Ensemble ressort selon l'une quelconque des revendications précédentes, comportant au moins un dispositif de protection contre la torsion par lequel le ressort (14) est relié dans une section d'introduction de force à un élément de remplacement.

15. Ensemble ressort selon l'une quelconque des revendications précédentes 5 à 14, comportant un dispositif de compensation pour compenser une modification supplémentaire d'un espacement dépendant de la charge entre les sections de transmission de force, lequel dispositif de compensation est relié au dispositif de transmission de force (12, 32, 54) de façon indépendante à l'encontre d'un déplacement relatif de l'unité de transmission de force le long de l'axe longitudinal du ressort à boudin.

16. Ensemble ressort selon l'une quelconque des revendications précédentes, comportant un dispositif d'amortissement (10, 230).

17. Ensemble ressort selon la revendication 16, dans lequel le dispositif d'amortissement (10, 230) est au moins partiellement entouré par le dispositif de transmission de force et/ou le dispositif de réglage (18, 30, 52).

18. Ensemble ressort selon au moins l'une quelconque des revendications 5 à 17, lequel est monté dans un longeron à fourche ou dans un tube de fourche d'une bicyclette, le dispositif de réglage (140, 210) étant monté de sorte que le ressort à boudin (14) soit logé de manière fixe par une de ses extrémités dans un bouton tournant qui est un bouton tournant sur une fourche, le bouton tournant (18) étant logé avec le ressort à boudin (14) autour de l'axe du ressort à boudin de manière rotative, et le ressort à boudin (14) se trouvant à un second endroit avec ses enroulements dans un filetage d'un couvercle amortisseur (12), et une rotation du bouton(18) tournant poussant les enroulements du ressort à boudin (14) à s'enrouler en spirale dans l'évidement sur le couvercle amortisseur (12), de sorte que le filetage aille à l'encontre du ressort à boudin (14) et que l'espacement entre l'extrémité du ressort à boudin pourvue du bouton rotatif (18) et la section des enroulements du ressort à boudin qui se trouve momentanément dans le filetage soit modifiée, de sorte que le ressort à boudin (14) modifie sa longueur efficace de ressort à boudin sans être en plus tendu ou détendu.

19. Ensemble ressort selon au moins l'une quelconque des revendications 5 à 17, qui est monté dans un longeron à fourche ou un tube de fourche d'une bicyclette, le dispositif de réglage étant réalisé sous forme de bouton rotatif (52) avec une tige de tube (30) pourvue d'un filetage femelle et pouvant régler l'espacement des sections de transmission de force sur le ressort à boudin (14) par un dispositif de réglage, la tension du ressort à boudin restant constante et le bouton tournant étant un bouton tournant sur une fourche, ce filetage s'engrenant en outre dans les enroulements du ressort à boudin (14), de sorte que le ressort à boudin (14) forme une sorte de contre-spire, et le ressort à boudin (14) appuyant sur une extrémité détournée du bouton tournant (52) contre un élément de remplacement (40), le bouton tournant (52) pressant en outre par rotation du bouton tournant (52) l'ensemble de la tige en s'éloignant par rapport à l'élément de remplacement ou se rapprochant par rapport à l'élément de remplacement (40) et le filetage relié ainsi au bouton de réglage (52) entrant en outre dans le ressort à boudin (14) ou sortant de celui-ci par rotation, de sorte que la longueur efficace du ressort à boudin se modifie, et l'élément de remplacement étant disposé par rapport au bouton de réglage (52) de manière à être mobile axialement, de sorte qu'une modification de la tension du ressort à boudin consécutive au processus de réglage soit évitée dans la zone de chaque longueur efficace du ressort à boudin.

20. Ensemble ressort selon au moins l'une quelconque des revendications 5 à 17, qui est monté dans un longeron à fourche ou un tube de fourche d'une bicyclette, le dispositif de réglage étant réalisé sous forme de bouton rotatif avec une tige (54) pourvue d'un filetage mâle (56) et pouvant régler l'espacement des sections de transmission de force sur le ressort à boudin (14) par un dispositif de réglage, la tension du ressort à boudin restant constante et le bouton tournant étant un bouton tournant sur une fourche, ce filetage s'engrenant en outre dans les enroulements du ressort à boudin (14), de sorte que le ressort à boudin (14) forme une sorte de contre-spire, et le ressort à boudin (14) appuyant sur une extrémité détournée du bouton tournant (52) contre un élément de remplacement, le bouton tournant (52) pressant en outre par rotation du bouton tournant (52) l'ensemble de la tige en s'éloignant par rapport à l'élément de remplacement ou se rapprochant par rapport à l'élément de remplacement (40) et le filetage relié ainsi au bouton de réglage (52) entrant en outre dans le ressort à boudin (14) ou sortant de celui-ci par rotation, de sorte que la longueur efficace du ressort à boudin se modifie, et l'élément de remplacement étant disposé par rapport au bouton de réglage (52) de manière à être mobile axialement, de sorte qu'une modification de la tension du ressort à boudin consécutive au processus de réglage soit évitée dans la zone de chaque longueur efficace du ressort à boudin.

21. Ensemble ressort selon au moins l'une quelconque des revendications 5 à 17, qui est monté dans un longeron à fourche ou dans un tube de fourche d'une bicyclette, le tube vertical (30) de la bicyclette logé de manière rotative comportant un composant (32) dans sa zone orientée vers le bas ou étant relié de manière fixe au composant (32), lequel comporte un filetage intérieur (34), et un ressort à boudin (14) pouvant être reçu par ce filetage intérieur (34), de sorte que le ressort à boudin (14) forme avec le filetage intérieur (34) une sorte de liaison d'écrou, le ressort à boudin (14) appuyant sur une extrémité en face d'un longeron à fourche logé de manière à pouvoir être poussé axialement par rapport à un tube vertical (30) ou sur un composant relié de manière fixe à celui-ci et une rotation du tube vertical (32) poussant le ressort (14), qui représente une sorte de filetage extérieur, à se déplacer dans le filetage intérieur (34) du tube vertical (32), de sorte que la longueur efficace du ressort, donc la longueur entre la zone d'enroulement de ressort (14) qui est reçue dans le filetage intérieur (34) du tube vertical (32), et l'appui du ressort (14) sur le longeron à fourche (40) soit modifiée ainsi que la longueur efficace du ressort, sans que la précontrainte du ressort (14) en soit modifiée dans la zone longitudinale efficace du ressort.
